# EUROPEAN PATENT SPECIFICATION

(11) **EP 4 114 717 B1**
(45) Date of publication and mention of the grant of the patent: **05.11.2025**
(21) Application number: 21708370.8
(22) Date of filing: 02.02.2021
(51) Int. Cl.: B62J 15/00, B62J 6/015, B62J 6/04, B62J 6/045, B29C 48/07, F21S 41/24, F21S 41/20, B60Q 1/26, B60Q 1/30, B62D 25/18

(54) **LUMINOUS MUDGUARD FOR VEHICLE WHEELS AND MANUFACTURING PROCESS THEREOF**
LEUCHTSCHUTZBLECH FÜR FAHRZEUGRÄDER UND HERSTELLUNGSVERFAHREN DAFÜR
GARDE-BOUE LUMINEUX POUR DES ROUES DE VÉHICULE ET SON PROCÉDÉ DE FABRICATION

(30) Priority: 06.02.2020 IT 202000002335
(43) Date of publication of application: 11.01.2023
(73) Proprietor: N.I.T. New Innovative Technologies S.r.l., 20085 Locate di Triulzi (Milano) (IT)
(72) Inventor: MOLINARI, Giorgio, 20085 Locate di Triulzi (Milano) (IT)
(74) Representative: Penza, Giancarlo
(86) International application number: PCT/IB2021/050823
(87) International publication number: WO 2021/156739

(56) References cited:
- CN-U- 202 827 882
- CN-U- 203 544 222
- CN-U- 206 871 247
- DE-U1- 202013 004 075
- DE-U1- 202015 001 028
- FR-A3- 2 994 684

## Description

### TECHNICAL FIELD OF THE INVENTION

The present invention relates to a luminous mudguard for wheels of vehicles, such as bicycles, tricycles and quadricycles, of the electric type or with pedals with muscular propulsion, or a luminous mudguard for wheels of vehicles with an internal combustion engine.

### PRIOR ART

Rear lights fixed to the rear mudguard of a bicycle or to be applied to the bicycle frame are known: said lights are supplied by a battery or a dynamo.

The rear lights with filament lamps are little efficient and if powered by a dynamo, when the bicycle is stationary or travelling at low speeds, the power supply to the lamp is null or insufficient to make it bright enough; when a cyclist is stopped at a crossing or red light, the rear light is off and this can pose a serious danger, as if he stops in the dark of in low light, the cyclist is not visible to a motor vehicle approaching the crossing or traffic light.

LED (Light Emitting Diode) luminous devices mounted on bicycles have been introduced on the market for several years; these devices operate on a battery whose duration, in the case of prolonged and intense use, never exceeds 20-30 hours of operation, with additional costs over time due to the replacement of the battery, in the case of frequent use of the bicycle.

Furthermore, for many of these LED devices the brightness (and therefore the visibility) is often insufficient in some environmental and/or meteorological conditions; this is due to the compromise between luminous efficiency, energy consumption (battery life, over time) and the number of luminous sources (LEDs) used in the devices.

Generally, the LED devices comprise from 1 to 7 LEDs, with various lighting functions, depending on the model: steady high-intensity (which consumes more energy) or low-intensity light, pulsed light at various frequencies or with sequences that alternate the lighting of the LEDs, the latter not very functional to the visibility of the bicycle.

Many of the LED devices are not resistant to water or moisture, so if the bicycle is used daily or frequently in the winter or in particularly rainy and humid periods, the internal contacts (to the battery or the on/off button) tend to oxidise or rust and therefore, after a short time, the cyclist is forced to replace the device.

In some cases the poor quality of the materials used for assembling the LED devices can create problems: for example, when they must be opened for example to replace the battery, the plastic breaks easily, or the parts for the fixing to the bicycle wear or break.

The fixing systems between metal and plastic, which are very common, do not allow a rusty screw to grip the threaded plastic part, or the rubber fixing sealing ring ("O" ring) for fixing dries, cracking and breaking.

In recent years, luminous devices with a rechargeable internal battery have been placed on the market, but also in this case the operating time is limited, due to the low power of the battery.

Furthermore, even with LED devices with a rechargeable internal battery, in the vast majority of cases the poor quality of the materials used causes them to break very easily; for example, the fixing systems of the device, which must be uncoupled for charging and then recoupled once charged, deform or break over time.

Furthermore, these LED devices with a rechargeable internal battery can have problems with false contacts to the charging connector, even if suitably protected by a rubber tab.

The LED devices with a rechargeable internal battery also have all the problems listed above for the battery devices.

CN 203544222 U discloses a bicycle, mudguard capable of emitting light.

In particular, the mudguard comprises a base provided with two grooves in the circumferential direction in which two LED 7 strips positioned on a flexible printed circuit board 6 are inserted, wherein each LED strip is provided with 3 side-by-side LEDs: in this way the mudguard is luminous in two distinct sectors.

DE 202015001028 U1 discloses a bicycle mudguard provided with an integrated rear light device.

In particular, the mudguard 1 comprises a housing 2 positioned in an opening of the mudguard, wherein a LED light source is positioned in the housing and wherein the housing comprises a translucent wall 5 of red plastic that in use forms a protruding illuminated surface 8 that follows the curvature of the mudguard.

### SUMMARY OF THE INVENTION

The present invention relates to a luminous mudguard for vehicle wheels as defined in the enclosed claim 1 and its preferred embodiments described in the dependent claims 2 to 8.

The basic idea is to make the mudguard itself the luminous device, with the advantage of increasing the visibility of the vehicle on which the mudguard is mounted (and therefore the safety of the cyclist), while maintaining protection from splashes of water and mud.

Furthermore, the luminous mudguard according to the invention has the advantage of being clearly visible also laterally, is reliable in use, is safe, intelligent and durable over time.

It is also an object of the present invention a luminous mudguard + power supply and control device kit as defined in the enclosed claim 9.

It is also an object of the present invention a vehicle with at least two wheels, in particular a bicycle, a tricycle or a quadricycle, as defined in the enclosed claim 10.

It is also an object of the present invention a process for manufacturing a luminous mudguard as described in the enclosed claims 11 and 15 and the preferred embodiments thereof described in the dependent claims 12 to 14.

### BRIEF DESCRIPTION OF THE DRAWINGS

Additional features and advantages of the invention will become more apparent from the description which follows of a preferred embodiment and the variants thereof, provided by way of example with reference to the appended drawings, in which:
- Figure 1A shows a view of a portion of a bicycle on whose rear wheel a luminous mudguard according to the invention is mounted, in which a part of the mudguard is luminous;
- Figure 1B shows a view of a portion of a bicycle on whose rear wheel a luminous mudguard according to the invention is mounted, in which a larger portion of the mudguard is luminous, in particular the luminous portion extends along the entire width of the mudguard,
- Figures 1C-1D show a front and rear perspective view of a luminous mudguard according to the invention, when it is mounted on the side wheels of a tricycle or a quadricycle;
- Figure 2A shows an exploded view of the luminous mudguard of Figure 1A, in which only a part of the mudguard is luminous by means of a back-lighting;
- Figure 2B shows a sectional view of the luminous mudguard of Figure 2A implemented with flexible electronics;
- Figures 2C-2D show a sectional view of the luminous mudguard of Figure 2A implemented with technologies of three-dimensional electronics on plastic;
- Figure 2E shows an exploded view of a luminous mudguard, in which a greater portion of the mudguard is luminous by means of a back-lighting;
- Figures 2F-2G show a sectional view of the luminous mudguard of Figure 2E implemented with technologies of three-dimensional electronics on plastic;
- Figure 3A shows an exploded view of the luminous mudguard of Figure 1A, in which only a part of the mudguard is luminous by means of a lateral lighting;
- Figure 3B shows a sectional view of the luminous mudguard of Figure 3A implemented with flexible electronics;
- Figures 3C-3D show a sectional view of the luminous mudguard of Figure 3A implemented with technologies of three-dimensional electronics on plastic;
- Figure 3E shows an exploded view of a luminous mudguard, in which a greater portion of the mudguard is luminous by means of a lateral lighting;
- Figures 3F-3G show a sectional view of the luminous mudguard of Figure 3E implemented with two possible manufacturing processes, in which a larger portion of the mudguard is luminous by means of a lateral lighting;
- Figures 4A-4B show two exploded views of the luminous mudguard of Figure 1A implemented with technology of three-dimensional electronics on plastic of IME or IMSE type, in which only a part of the mudguard is luminous by means of the use of a light guide;
- Figures 4C and 4D show two exploded sectional views of the luminous mudguard of Figures 4A and 4B;
- Figure 4E shows an exploded view of the luminous mudguard of Figure 1A implemented with the technology of three-dimensional electronics on plastic of Two Shots Molded type, in which only a part of the mudguard is luminous by means of the use of a light guide;
- Figure 4F shows a sectional view of the luminous mudguard of Figure 4E;
- Figures 5A and 5B show two exploded views of a luminous mudguard, in which a greater portion of the mudguard is luminous by means of the use of two light guides;
- Figures 5C and 5D show two exploded sectional views of the luminous mudguard of Figures 5A and 5B;
- Figure 6 shows an exploded form of a wireless-type power supply and control device for supplying and controlling the luminous mudguard according to the first, second, third or fourth embodiment of the invention;
- Figure 7 shows a perspective view of the power supply and control device of Figure 6 assembled;
- Figure 8 shows another perspective view of the power supply and control device of Figure 6, referring to the coupling system to the luminous mudguard.

### DETAILED DESCRIPTION OF THE INVENTION

It should be noted that in the description below, identical or similar blocks, components or modules, even if they appear in different embodiments of the invention, are indicated by the same numerical references in the figures.

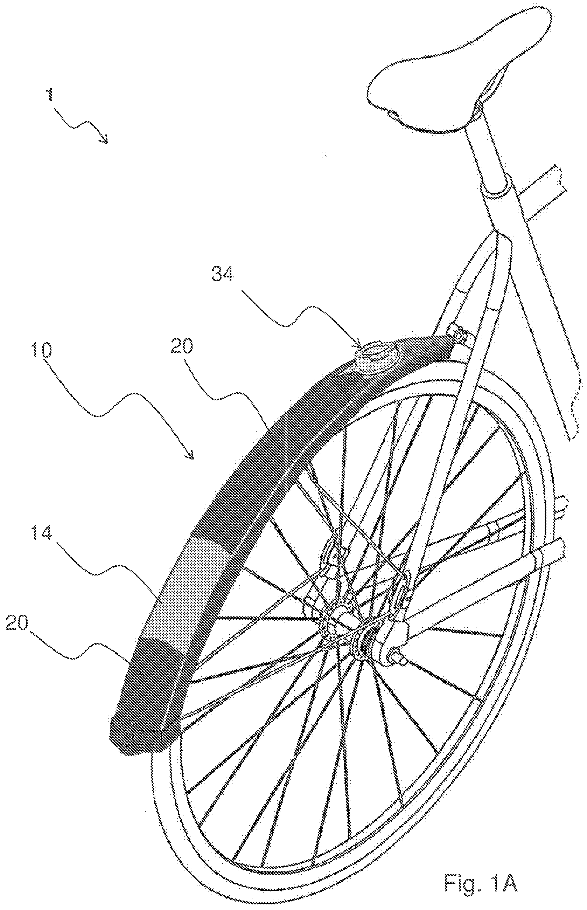

Figure 1A shows a perspective view of a portion of a bicycle 1 on whose rear wheel a luminous mudguard 10 according to an embodiment of the invention is mounted.

The mudguard 10 comprises a luminous portion 14 that creates a rear light of the bicycle 1 positioned in the end zone of the mudguard 10, in which the luminous portion 14 extends along a part of the main extension of the mudguard 10 defined by the curvature of the wheel tread and extends along only a portion of the transverse extension of the mudguard 10 defined by the width of the wheel tread.

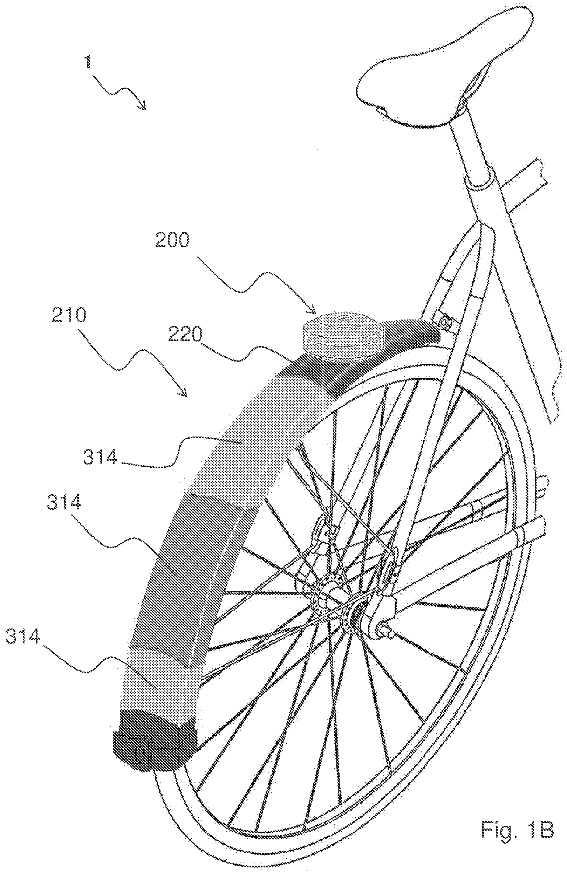

Figure 1B shows a perspective view of a portion of a bicycle 1 on whose rear wheel a luminous mudguard 210 is mounted according to another embodiment of the invention.

The mudguard 210 comprises a luminous portion 314 that creates a rear light of the bicycle 1 positioned in the end zone of the mudguard 210, in which the luminous portion 314 extends along a main extension of the mudguard 210 defined by the curvature of the wheel tread and extends along the entire transverse extension of the mudguard 210 defined by the width of the wheel tread.

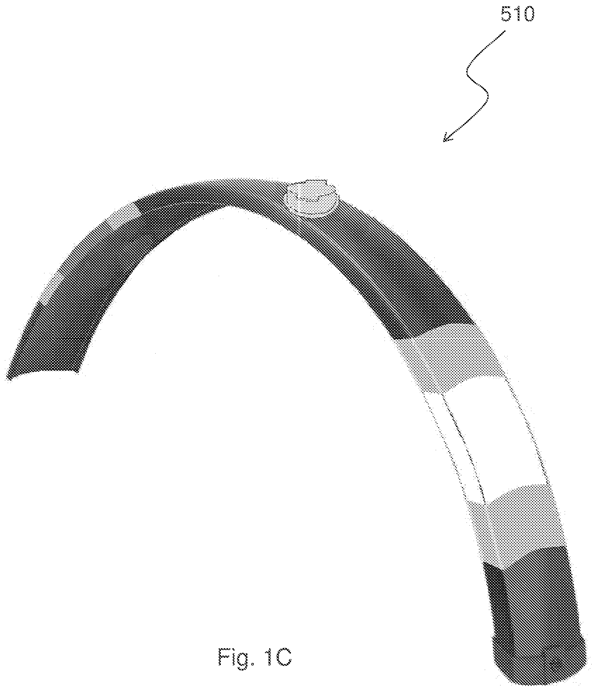

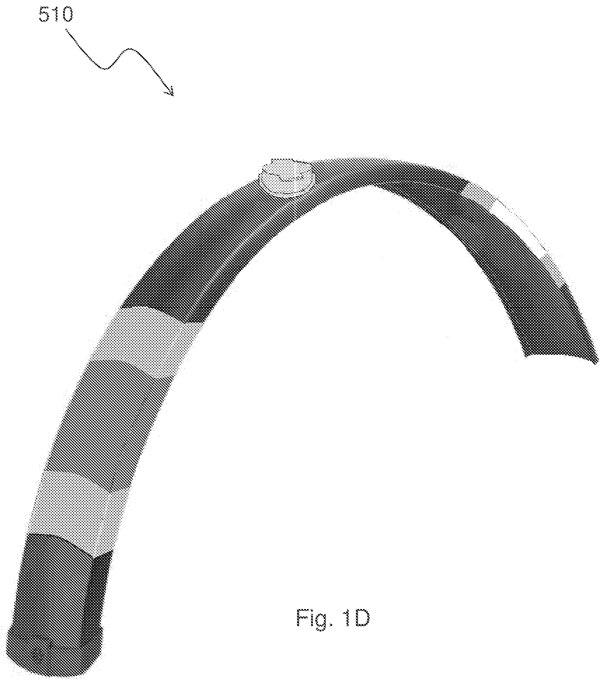

Figures 1C and 1D show a front and rear perspective view of a luminous mudguard 510 according to another embodiment of the invention, when the luminous mudguard 510 is mounted on the lateral wheels of a tricycle, such as a cargo-bike.

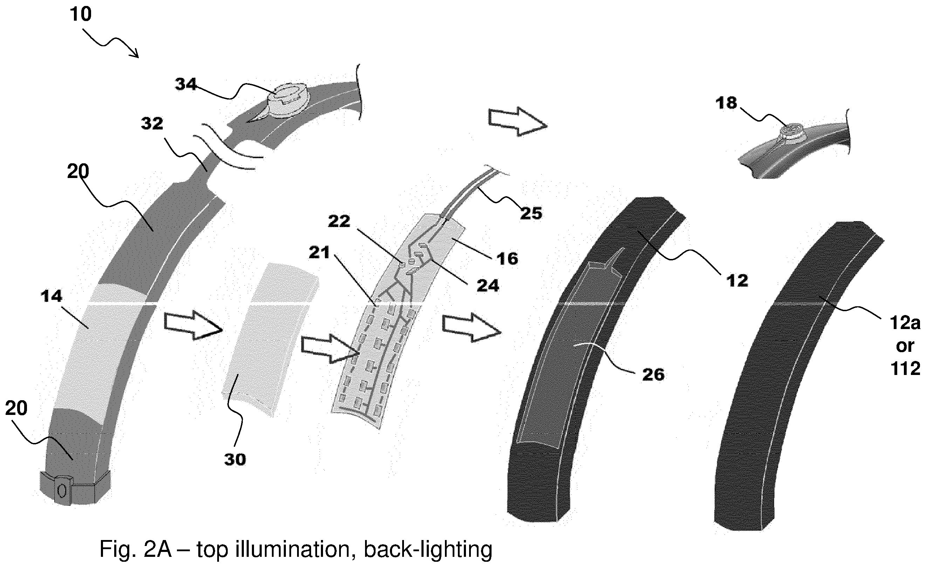

With reference to Figures 1A and 2A, a luminous mudguard 10 is shown for a bicycle 1 according to an embodiment of the invention, in which only a portion 14 of the mudguard 10 is made luminous by means of a back-lighting.

It should be noted that the luminous mudguard 10 can also be mounted on each of the two rear and/or lateral wheels of a tricycle or quadricycle.

In particular, Figure 1A shows a portion of the bicycle 1 having a rear wheel on which the luminous mudguard 10 is mounted in which the luminous portion 14 constitutes the rear light of the bicycle, while Figure 2A shows an exploded view of the same luminous mudguard 10.

The luminous mudguard 10 comprises:
- a mudguard base 12, 12a or 112;
- an electronic board 16;
- an optical diffuser 30;
- a power supply interface 18 positioned on the mudguard base 12, 12a or 112, in particular on an end portion thereof which is near the bicycle frame;
- an electrical cable 25 connecting the power supply interface 18 with the electronic board 16;

- a cover 20 having a coupling portion 34 enclosing the power supply interface 18.

The mudguard base 12, 12a or 112 serves to protect the cyclist from splashes of water, mud, stones, sand and dirt that, in use, are lifted by the rear wheel.

The mudguard base 12, 12a or 112 is made of polymeric or metal material, has a thickness for example comprised between 1.0 mm and 2.0 mm and may have different shapes depending on the type of vehicle on which it is mounted, the diameter of the wheel and the width of the wheel tyre.

For the purposes of the present invention, the term "polymeric material" (or "plastic material") means a wide range of synthetic or serni-synthetic polymeric organic compounds with high molecular weight that are malleable and can therefore be modelled into solid objects.

Said polymeric organic compounds can be pure (co)polymers or comprising other substances aimed at improving the properties and reducing costs, such as for example organic and/or inorganic additives.

For the purposes of the present invention, the term "(co)polymer" is used to indicate both the polymers, also known as homopolymers, i.e., macromolecules whose polymer chain contains repeating units obtained from the union of a single type of monomers, and copolymers, i.e., macromolecules whose polymer chain contains repeating units obtained by the union of two monomers of two or more varying types.

Preferably, the polymeric material is polycarbonate or ABS.

In particular, the mudguard base 12, 12a or 112 has a main extension (i,e., that defined by the circular shape of the wheel tyre tread of the bicycle) that is substantially circumferential, so as to adapted to the circular shape of the wheel tyre tread of the bicycle 1.

The mudguard base 12, 12a or 112 further has a secondary transverse extension perpendicular to the main extension, therefore it is defined by the curvature of the transverse section of the wheel tyre tread, in which the transverse extension has a profile that may also be circumferential or substantially flat or trapezoidal.

The transverse extension of the mudguard base 12, 12a or 112 is therefore much less than its main extension.

The electronic board 16 is overlapping a portion of the mudguard base 12, 12a or 112 according to the following two possible solutions:
- the lower surface of the electronic board is in contact with the upper surface of the mudguard base 12, 12a or 112;

- the mudguard base 12 comprises a recess 26 for housing the electronic board 16.

One or more light emitting diodes (LEDs) 21 of the top view emission type and active and passive SMD electronic components 22 are mounted on the electronic board 16.

For exarnple, the thickness of the electronic board 16 is between 0.2 mm and 0.5 mm.

The electronic components 22 are for example driving circuits of said one or more LEDs 21.

Furthermore, the electronic board 16 comprises the metal tracks 24 for electrically connecting the LEDs 21 and the electronic components 22 together.

The electronic board 16 therefore has the function of electrically connecting the LEDs 21 and the electronic components 22, by means of the metal tracks 24.

The cover 20 and the mudguard base 12, 12a or 112 have a main extension that is substantially circumferential, so as to adapt to the circular shape of the bicycle wheel 1 (i.e., the wheel tyre tread); in particular, the curvature of the main circumferential extension of the cover 20 is substantially equal to the curvature of the main circumferential extension of the mudguard base 12, 12a or 112 and furthermore said common curvature is greater than or equal to the curvature defined by a portion of the bicycle wheel (i.e., the wheel tyre tread curvature).

The cover 20 and the mudguard base 12, 12a or 112 further have a transverse extension (i.e., perpendicular to the main extension and thus defined by the curvature of the transverse section of the wheel tyre) that is much smaller than the main extension so as to adapt to the width of the bicycle wheel, in which the transverse extension has a profile that can also be circumferential or substantially flat or trapezoidal.

The cover 20 is made of polymeric material, preferably polycarbonate or PET, and has a thickness for example between 1.0 mm and 2.0 mm.

The cover 20 is overlapping the mudguard base 12, 12a or 112 and is fixed in contact therewith, thus incorporating the optical diffuser 30 and the electronic board 16.

The cover 20 is fixed to the mudguard base 12, 12a or 112 by means of ultrasonic bonding, chemical bonding or by injection co-moulding.

The cover 20 comprises:
- a transparent or semi-transparent portion 14 with respect to the light beam generated by the LEDs 21 and diffused by the optical diffuser 30;
- the portion 34 for mechanical coupling to a power supply and control device 200;
- a remaining portion adjacent to the transparent or semi-transparent portion 14.

The portion 14 is therefore at least partially transparent (i.e., translucent) with respect to the diffused light beam.

The portion 14 is positioned in correspondence with the optical diffuser 30 (i.e., the portion 14 is overlapping the surface of the optical diffuser 30) and protects the LEDs 21 mounted on the electronic board 16.

It can be noted that the transverse extension of the transparent or semi-transparent portion 14 has substantially the same dimension as the transverse extension of the mudguard base 12, 12a or 112 (i.e., that defined by the curvature of the transverse section of the wheel tyre): the mudguard 10 is thereby made luminous up to its lateral edge.

Alternatively, it is possible to have a transparent or semi-transparent portion 14 with a smaller transverse extension than that of the mudguard 10: the mudguard 10 is thereby made luminous only in a central portion.

Preferably, the cover 20 comprises an intermediate portion 32 that protects the electrical cable 25 connecting the electronic board 16 to the power supply interface 18.

Advantageously, the portion 14, the intermediate portion 32 and the coupling portion 34 are made in a single piece; thereby all the electronic components of the luminous mudguard are perfectly protected by the cover 20, being protected from water, moisture, dust, impacts and the like.

The optical diffuser 30 is an optical device having the function of uniformly diffusing the light beam generated by the LEDs 21 of the electronic board 16 towards the transparent or semi-transparent portion 14, by means of the multiple bounce of the light beam inside the volume of the diffuser 30 and outflow of the light beam through the upper surface of the diffuser itself.

In particular, the optical diffuser 30 is interposed between the electronic board 16 and the cover 20 and is at least partially overlapping a portion of the electronic board 16 on which the LEDs 21 are mounted.

The optical diffuser 30 has a thickness between 0.5 mm and 1.5 mm, for example.

The optical diffuser 30 is transparent with respect to an incident light beam and can be made of resin, satin plastic (e.g., PMMA) or polycarbonate, and has a surface suitably machined to obtain a good diffusion and homogeneity of the incident light beam.

In particular, the optical diffuser 30 is overlapping the electronic board 16 in correspondence with the LEDs 21 and is positioned in the centre of the mudguard 10 in its transverse extension (i.e., in width).

In particular, the lower surface of the optical diffuser 30 is overlapping the portion of the upper surface of the electronic board 16 on which the LEDs 21 are mounted.

The optical diffuser 30 preferably has a shape equal to that of the transparent or semi-transparent portion 14 of the cover 20

For example, the orthogonal projection of the perimeter of the optical diffuser 30 on a plane substantially defines the shape of a rectangle.

Preferably, the optical diffuser 30 has a rnainly circumferential extension, so as to follow the circumferential extension of the portion of the electronic board 16 and thus follow the circumferential extension of the portion 14 of the cover 20.

Furthermore, the optical diffuser 30 has a secondary transverse extension (i.e., perpendicular to the main extension) that adapts to the secondary extension of the portion of the electronic board 16 and adapts to the circumferential extension of the portion 14 of the cover 20.

The number of LEDs 21 on the electronic board 16 is sufficient for the overall luminous intensity generated by the LEDs 21 such to illuminate the optical diffuser 30, uniformly diffuse the light and illuminate the transparent or semi-transparent portion 14 of the cover 20.

The LEDs 21 are thus positioned under the optical diffuser 30 (and therefore also under the transparent or semi-transparent portion 14 of the cover 20): thereby the light beam generated by the LEDs 21 is incident on the optical diffuser 30 and is uniformly diffused therefrom generating a diffused light beam FLR, which illuminates the entire surface defined by the transparent or semi-transparent portion 14, thus making the mudguard 10 luminous in correspondence with the transparent or semi-transparent portion 14.

Preferably, the optical diffuser 30 is coloured (e.g., red) and thus generates a coloured diffused light beam (in the example red), therefore the portion 14 is made luminous with the desired colour (in the example red) and thus the mudguard 10 illuminates in the desired colour in the zone 14 forming the rear light.

For example:
- the LEDs 21 generate a white light beam and the optical diffuser 30 is red, so the mudguard 10 is illuminated red in correspondence with the portion 14; or
- the LEDs 21 generate a red light beam and the optical diffuser 30 is white, therefore the mudguard 10 is illuminated red in correspondence with the portion 14;
the LEDs 21 generate a red light beam and the optical diffuser 30 is red, so the mudguard 10 is illuminated red in correspondence with the portion 14.

Preferably, the mudguard 10 further comprises a pair of elements 42 interposed between the end portions of the optical diffuser 30 and the end portions of the portion 14, having the function of protecting the LEDs 21 and enclosing in the optical diffuser 30 alone all the light emitted by the LEDs 21 without any further light dispersion.

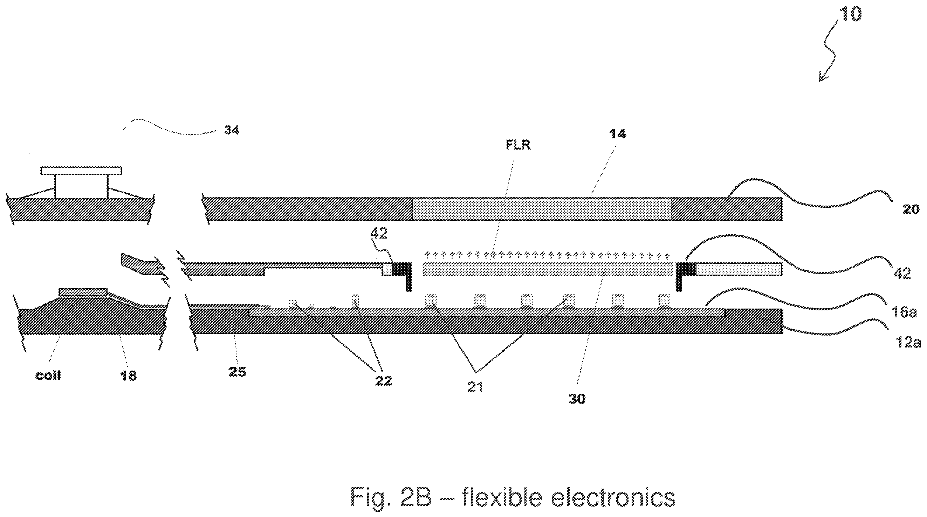

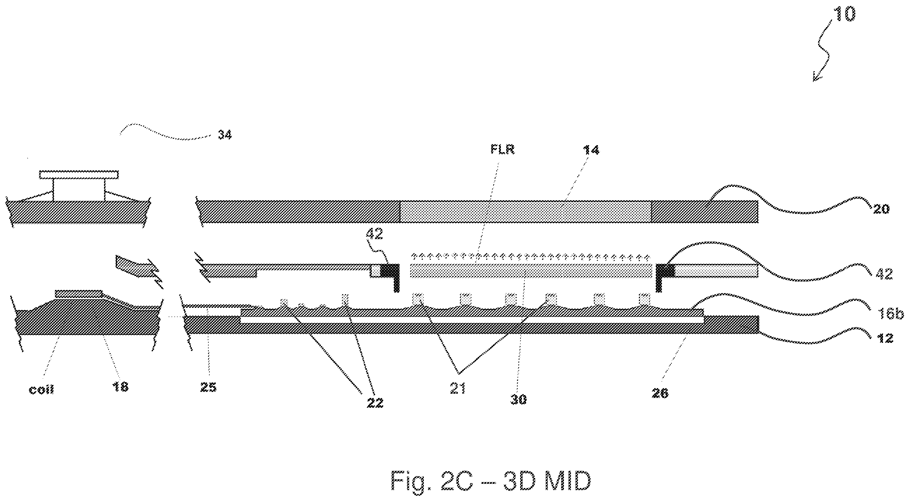

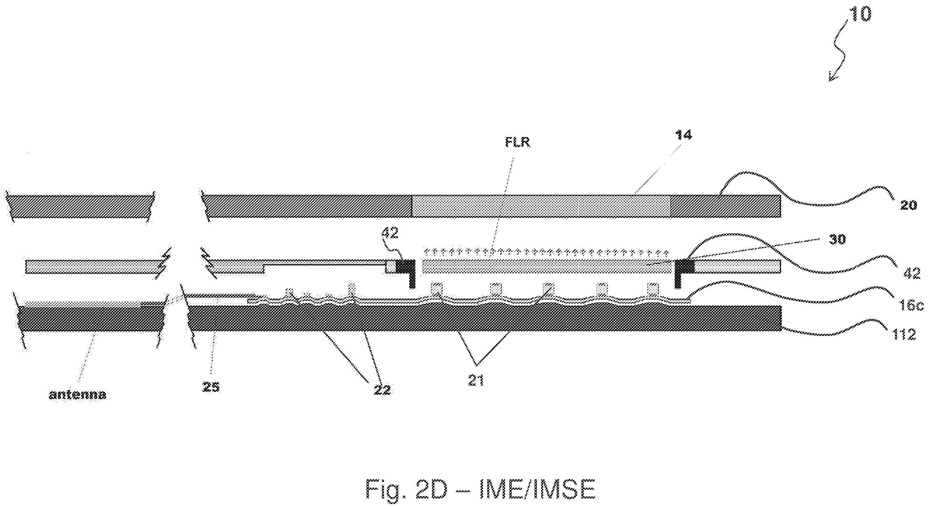

The electronic board 16 of Figure 2A may alternatively be made by means of flexible electronics technology or with some of the applications or methodologies used in the technology known as "three-dimensional electronics on plastic", as it will be explained in more detail in the following with reference to the description of Figures 2B, 2C and 2D.

The power supply interface 18 of the luminous mudguard 10 has the function of generating electric power to supply the LEDs 21 and the electronic components 22 mounted on the electronic board 16.

The power supply interface 18 is alternatively a short-range wireless power receiver or an electric power connector or an electric power cable.

The short-range wireless power receiver is housed at least in part inside the coupling portion 34 and is used for example in the case where the luminous mudguard 10 is mounted on a muscular propulsion vehicle, such as a bicycle (two wheels), a tricycle (three wheels) or a cargo bike (three or four wheels): in this case the electric power necessary to supply the LEDs 21 and the electronic components 22 mounted on the electronic board 16 is generated by means of the wireless power receiver, as will be explained in more detail in the following in the description of the induction, resonance, capacitive or radio-frequency type wireless power receiver.

The wireless power receiver is also used in the case where the luminous mudguard 10 is mounted on a pedal-assisted bicycle, i.e., provided with an electric motor that helps the cyclist during pedalling in particular conditions of the route: in this case, in fact, the battery already present on the pedal-assisted bicycle is exploited and a suitable electric connection cable is used having at one end an electrical connector adapted to be connected with the electrical system of the bicycle (i.e., to the battery) and having at another end a wireless contactless connector provided with quick coupling to couple it to the coupling portion 34 of the mudguard 10.

The power supply connector is used if the luminous mudguard 10 is mounted on a pedal-assisted bicycle provided with a battery: in this case, in fact, an electric cable is used with a special electrical terminal at one end that is connected with the power supply connector of the mudguard 10 and having at another end an electrical connector adapted to be connected with the electrical system of the bicycle (i.e., to the battery).

The power connector is positioned in correspondence with the coupling portion 34 and is suitably made for easy coupling/uncoupling and is suitably protected from the infiltration of water, moisture or dust.

If an electric power supply cable is used, it exits directly from the mudguard 10 to be connected with the electrical system of the electric bicycle or of the vehicle with thermal engine, it has a suitable length and protection.

The power supply connector can also be used if the luminous mudguard 10 is mounted on a motor vehicle with an internal combustion engine (i.e., a motorcycle), as it is also already provided with a battery.

The on/off controls of the luminous mudguard 10 may also be positioned on the mudguard itself (e.g., a capacitive key) or on the handlebar of the bicycle, tricycle, cargo bike, or motorcycle (e.g., a remote control fixed on the handlebar).

The wireless power receiver may for example be of the inductive type between transmitter and receiver, resonant, capacitive or radio-frequency type.

In the case of a wireless electromagnetic induction power receiver, this is implemented with a receiving inductive coil that is raised with respect to the surface of the mudguard base 12, 12a or 112 and is housed inside the coupling portion 34 of the luminous mudguard 10; in other words, the coupling portion 34 encloses the receiving inductive coil, which thus constitutes the power supply interface 18.

The inductive coil is electrically connected with the electronic board 16 through an electric cable (or plate) 25 or through a metal track 24 made on the electronic board 16.

The receiving inductive coil is an electric wire winding (typically square or rectangular or circular in shape) adapted to be inductively coupled (by means of a variable magnetic field at a fixed frequency) with another transmitting coil of a wireless power supply and control device 200, i.e., where the power supply occurs by proximity, without requiring physical electrical contact.

The power supply and control device 200 is external to and positioned near the luminous mudguard 10, thereby forming a transformer composed of the transmitting and receiving coil.

A current is generated (by means of a battery) through the windings of the transmitting coil of the power supply and control device 200, generating a variable magnetic field through the transmitting coil; the variable magnetic field also crosses the receiving coil of the luminous mudguard 10 and thus generates a current induced through the receiving coil itself, in which said induced current is used to supply the LEDs 21 and the electronic components 22 mounted on the mudguard 10.

In the case of a wireless electromagnetic power receiver of the magnetic resonance type, this is implemented with a receiving magnetic resonance coil housed inside the coupling portion 34 of the luminous mudguard 10; in other words, the coupling portion 34 encloses the receiving resonance coil, which thus constitutes the power supply interface 18.

The resonance coil is electrically connected with the electronic board through the electric cable 25 or a metal track 24 made on the electronic board 16.

The receiving magnetic resonance coil is an electric wire winding (typically square or rectangular or circular in shape) adapted to be coupled by resonance (i.e., by means of the same oscillation frequency) with another transmitting coil of the power supply and control device 200 external to and positioned near the luminous mudguard 10, thus forming a transformer composed of the transmitting and receiving coil, which may also not be perfectly aligned and may also be a few centimetres apart

A current is generated (by means of a battery) through the windings of the transmitting coil of the power supply and control device 200, generating a variable magnetic field through the transmitting coil; the variable magnetic field also crosses the receiving coil of the luminous mudguard 10 and thus generates a current induced through the receiving coil itself, in which said induced current is used to supply the LEDs 21 and the electronic components 22 mounted on the mudguard 10.

In the case of a wireless capacitive power receiver, this is implemented with a metal plate that is raised with respect to the surface of the mudguard base 12, 12a or 112 and is housed inside the coupling portion 34 of the luminous mudguard 10; in other words, the coupling portion 34 encloses the metal plate, which thus constitutes the power supply interface 18.

The receiving metal plate is electrically connected with the electronic board 16 through the electrical cable (or plate) 25 or through a metal track 24 made on the electronic board 16.

Said metal plate is adapted to be electrically coupled with another metal plate of the power supply and control device 200, by means of a capacitive coupling between the two metal plates that thus form a pair of opposing armors of a capacitor, said armors being insulated from each other by means of a thin interposed dielectric layer.

A voltage is generated (by means of a battery) to the metal plate of the power supply and control device 200, generating an electric field oscillating between the metal plate of the power supply and control device 200 and the metal plate of the luminous mudguard 10: said electric oscillating field in turn generates by electrostatic induction an alternating potential on the metal plate of the luminous mudguard 10, thus generating a current that supplies the LEDs 21 and the electronic components 22 mounted on the mudguard 10.

In the case of a wireless electromagnetic radio-frequency power receiver, a flexible antenna positioned in the mudguard 10 is used, so as to follow its shape along at least part of the circumferential extension of the mudguard 10.

The antenna thus constitutes the power supply interface 18 and is electrically connected with the electronic board 16 by means of an electric cable (or plate) 25 or by means of a metal track 24 made on the electronic board 16.

The antenna receives an oscillating radio-frequency electromagnetic field transmitted by another antenna of the power supply and control device 200: the mudguard receiving antenna 10 converts the oscillating electromagnetic field into an electric current, which is used to supply the LEDs 21 and the electronic components 22 mounted on the mudguard 10.

The power supply and control device 200 using the radio frequency may be coupled under the saddle, inserted into a fake bottle and inserted into the bottle holder or provided in the electronics of the electric bicycle or in the combustion engine vehicle.

For the purpose of the explanation of the invention, it is subsequently considered that the wireless electromagnetic power receiver is implemented with the inductive coil that constitutes the power supply interface 18, but similar considerations can be made in the case where the wireless electromagnetic power receiver is implemented with a resonance coil, with a metal electrode or with a radio-frequency antenna or with other types of wireless power transfer.

The electronic board 16 is electrically connected with the receiving inductive coil, in order to receive a power supply from the wireless power supply and control device 200, which will be described in more detail in the following.

The electrical connection between the electronic board 16 and the inductive coil can be implemented through an electric cable (or plate) 25 (see Figure 2A) or through a metal track 24 made on the electronic board 16.

Figure 2B shows a sectional view of the luminous mudguard 10 of Figure 2A in which the electronic board 16 is made by means of flexible electronics technology and has therefore been indicated with reference number 16a: in this case the thickness of the electronic board 16 is for example between 0.2 mm and 0.5 mm.

It can be seen in Figure 2B that the luminous mudguard 10 is formed by overlapping four at least partially overlapping layers that are formed (in order from bottom to top) by the mudguard base 12, the electronic board 16a with flexible electronics, the optical diffuser 30 and the cover 20, where the mudguard base 12 is the lowest layer and the cover 20 is the highest layer.

Note that for simplicity all the elements shown in Figure 2B are shown flat, but in use they will have a curved shape.

With reference to the electronic board 16a made by means of flexible electronics technology, this allows obtaining a flexible printed electronic circuit board, therefore the electronic board 16a is flexible.

In this case, boards assembled from plastic substrates with a thickness of a few microns are used, in which a polyamide-based film called Kapton (name assigned by the DuPont company) is used with an applied copper sheet and a coverlay, a film that is hot-pressed in place of the welding mask.

The printed electronic circuit board is made with the same technology as rigid boards.

The assembly of the LEDs 21 and the electronic components 22 occurs through the same welding systems used for the rigid printed circuit boards, but allowing the electronic board 16 to conform to the desired shape of the mudguard on its length.

According to a variant of the embodiment of Fig.2A, it is possible to replace the flexible electronic board 16 with one or more rigid electronic boards connected together by flexible electronics or flat cable; in this case it is preferable to arrange a more pronounced undercut in order to house the rigid boards in the mudguard, which is naturally curved.

However, the overall dimensions of said variant of the first embodiment will be greater and the luminous mudguard thus obtained is bulkier.

Figures 2C and 2D show the sectional views of the luminous mudguard 10 of Figure 2A in which the electronic board 16 is made with the use of two of the applications or methodologies used in the technology of three-dimensional electronics on plastic: in this case the electronic board 16 is indicated with the reference number 16b in Figure 2C and 16c in Figure 2D.

It should be noted that for simplicity all the elements shown in Figures 2C and 2D are shown flat, but in use will have a curved shape to follow the circumferential shape of the bicycle wheel.

In this case the electronic board 16b or 16c is made of a polymer-based layer.

The thickness of the polymer-based layer may vary for example from a few dozen microns to about 2 mm.

The polymer-based layer may be injection moulded or may be thermoformed (vacuum or pressure) so as to obtain a shape with a substantially circumferential main extension that adapts to the circular shape of the bicycle wheel, as will be explained in more detail in the following.

In the present description, the terms "three-dimensional electronics on plastic" or "polymer-based three-dimensional electronics" mean that the electronic components are fixed (for example with a glue) directly on the polymer base (for example plastic, ABS or PMMA) above special flat pads on ridges or in depressions with respect to the main circumferential extension of the board and/or with respect to the secondary transverse extension of the electronic board: said pads allow the positioning and correct fixing of the electronic components themselves to the polymer base with a main curved extension (for example circumferential), even when the polyrner base has a narrow curvature angle along a substantially circumferential main extension.

In particular, the use of three-dimensional electronics on plastic allows to position the electronic components of the electronic board 16 (LEDs 21 and other electronic components 22) both along the substantially circumferential main extension of the mudguard (i.e., that defined by the curvature of the bicycle wheel), and along the transverse extension of the mudguard (i.e., that defined by the transverse section of the wheel), in which the transverse extension of the mudguard 10 (and therefore of the electronic board 16) can be flat, circumferential (also with a narrow curvature angle) or composed of a broken line.

The technologies of three-dimensional electronics on plastic comprise several subfamilies of applications, but the following are advantageously used for the creation of the electronic board 16.

A first technology is indicated with 3D-MID (Moulded Interconnected Device) and specifically with the LDS (Laser Direct Structuring) technique and TSM (Two Shots Moulded), while the second technology is indicated with IME (In-Mould Electronic) or also IMSE (In-Mould Structural Electronic).

The IMSE technology was developed by the company TactoTek Oy, with registered office in Oulunsalo, Finland, website tactotek.com.

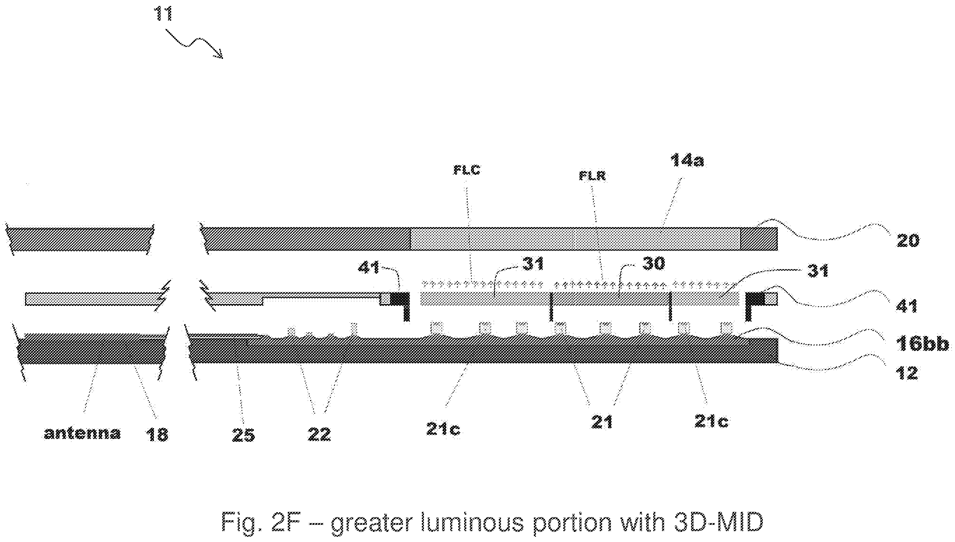

To make the electronic board 16 of the embodiment of Figure 2A with LDS technology (see Figure 2C where the electronic board is indicated with reference number 16b and see Figure 2F where the electronic board is indicated with reference number 16bb), a polymer is used, preferably ABS, PA, PC, PET, PBT, PPA, PPE, LCP, PEI or PEEK, doped with metal atoms in a suitable percentage.

The doped polymer is moulded into an injection mould to obtain the desired shape of the electronic board which (in the case of the electronic board 16b) is slightly curved in the main circumferential extension direction of the mudguard to follow the curvature of the wheel tyre of the cycle and is typically curved also in the secondary extension direction (perpendicular to the main circumferential direction) to follow the curvature of the transverse section of the wheel tyre.

The metal tracks 24 (connecting the LEDs 21 and the electronic components 22 together) and any electric cable 25 (connecting the power supply interface 18 to the electronic components 22) are traced by ablation on the surface of the moulded polymer by means of a laser beam with suitable wavelength, power, pulsation and focusing.

The ablation activates an additive present in the polymer only in the micro-grooves that are generated, leaving the rest of the surface of the polymer unchanged.

Three layers of as many different metals are deposited in the micro-grooves in successive galvanic baths: typically a layer of copper, one of nickel and finally one of gold are deposited in succession, all with suitable thicknesses of some microns.

The metal adheres only to the micro-grooves and not to the rest of the surface of the polymer, where the additive has not been activated by the laser.

The electronic board 16 is thus obtained with the metal tracks 24.

One or more LEDs 21 and the electronic components 22 are then mounted on the electronic board 16, fixed with suitable pastes or conductive glues, activated by a laser beam or by heat, for example using infrared lamps.

In the case where LDS technology is used, the presence of the recess 26 in which the electronic board 16 illustrated above is housed is provided.

The finished mudguard 10 is thus obtained by fixing the cover 20 to the mudguard base 12, thereby incorporating the electronic board 16 made with LDS technology and the optical diffuser 30.

The cover 20 is fixed in contact with the mudguard base 12 by means of ultrasonic bonding, chemical bonding or through injection co-moulding.

To make the electronic board 16 of the embodiment of Figure 2A with TSM technology (see Figure 2C where the electronic board is indicated with reference number 16b), two polymers are used, one "natural" preferably in ABS, PA, PC, PET, PBT, PPA, PPE, LCP, PEI or PEEK, and another polymer in ABS, PA, PC, PET, PBT, PPA, PPE, LCP, PEI or PEEK, suitably "doped".

The "natural" polymer is moulded into an injection mould to obtain the desired shape of the electronic board which (in the case of the electronic board 16) is slightly curved in the circumferential extension direction of the mudguard to follow the curvature of the wheel tyre of the cycle and is typically curved in the secondary extension direction (perpendicular to the circumferential direction) to follow the curvature of the transverse section of the wheel tyre.

Furthermore, the mould provides for the micro-grooves of the metal tracks 24 (which connect the LEDs 21 and the electronic components 22 and the power supply interface 18 together).

Furthermore, the "doped" polymer is moulded into the injection mould in the micro-grooves.

Finally, three layers of as many different metals are deposited in successive galvanic baths: typically a layer of copper, one of nickel and finally one of gold are deposited in succession, all with suitable thicknesses of some microns.

The metal adheres only in the micro-grooves of the "doped" polymer and not on the natural polymer.

The electronic board 16b is thus obtained with the metal tracks 24.

One or more LEDs 21 and the electronic components 22 are then mounted on the electronic board 16b, fixed with suitable pastes or conductive glues, activated by a laser beam or by heat, for example using infrared lamps.

In the case where TSM technology is used, the presence of the recess 26 in which the three-dimensional electronic board 16b illustrated above is housed is provided.

The finished mudguard 10 is thus obtained by fixing the cover 20 to the mudguard base 12, thereby incorporating the electronic board 16b made with TSM technology and the optical diffuser 30.

The cover 20 is fixed in contact with the mudguard base 12 by means of ultrasonic bonding, chemical bonding or through injection co-moulding.

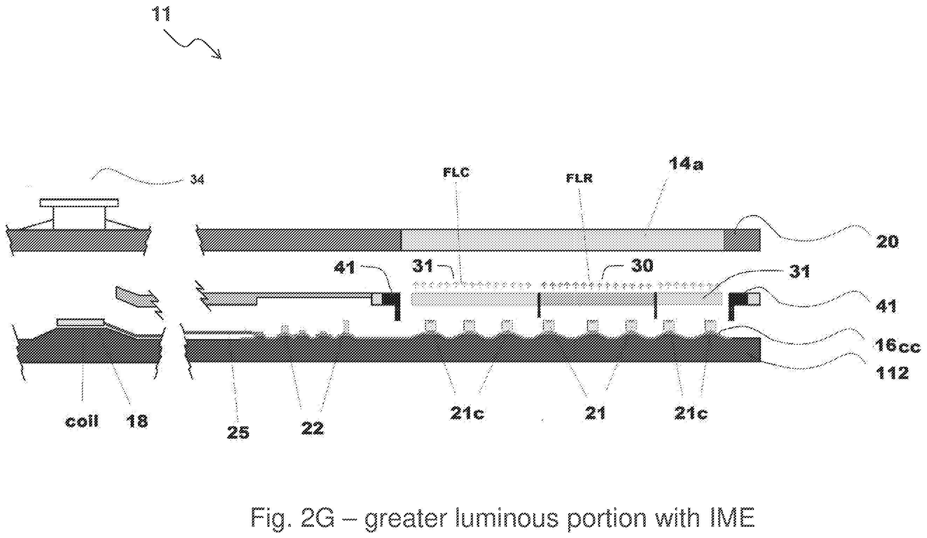

To make the electronic board 16 of the embodiment of Figure 2A with IME or IMSE technology (see Figure 2D where the electronic board is indicated with reference number 16c and see Figure 2G where the electronic board is indicated with reference number 16cc), a flexible substrate based on particular polymers, preferably polycarbonate or mouldable PET, is used.

The metal tracks 24 are printed on this substrate with suitable conductive and elastic inks, then one or more LEDs 21 and the electronic components 22 fixed with suitable pastes of conductive glues, activated through the heat of infrared lamps or at room temperature.

At this point the substrate is thermoformed in suitable vacuum or pressure moulds; in particular, the substrate is heated to a suitable temperature to allow moulding to the desired shape, depending on the desired type and size of mudguard (typically the substrate has a circumferential shape), obtaining the electronic board 16c or 16cc.

In particular, with this technology the thermoforming step comprises generating an upper surface of the mudguard base (indicated with 112 in Figures 2D, 2E, 2G, 3D, 3G, 4C, 4D, 5C, 5D) in which said upper surface comprises ridges and/or depressions and respective flat pads on the ridges and/or inside the depressions, then the thermoforming step comprises generating a undulating profile of the electronic board 16c or 16cc that adapts to the upper surface of the mudguard base 112, so as to generate an upper surface of the electronic board 16c or 16cc comprising ridges and/or depressions and respective flat pads on the ridges and/or inside the depressions, to allow the deposition and gluing of all the electronic components: in this case the recess 26 is unnecessary.

The finished mudguard 10 is then obtained by fixing the cover 20 to the mudguard base 112 (for example by injection moulding or thermoforming), thus incorporating the electronic board 16c and 16cc made with IME or IMSE technology and the optical diffuser 30, obtaining (by means of injection moulding or thermoforming) an upper surface of the mudguard base 112 having a undulating profile in which the position of the ridges and depressions coincides respectively with the position of the ridges and depressions of the lower surface of the electronic board 16c or 16cc.

Preferably, the coupling portion 34 comprises a protruding support platform, on which the receiving inductive coil is fixed.

The support platform allows the receiving inductive coil to be brought closer to a corresponding transmitting inductive coil contained in the wireless power supply and control device 200, for optimal energy transfer.

The coupling portion 34 is shaped so as to provide a male coupling 40 for the mechanical connection with the power supply and control device 200, as will be described better in the following.

The LEDs 21 may have different configurations.

The simplest configuration of a luminous mudguard for bicycles according to the present invention provides that the power supply and control device 200 is first coupled to the mudguard 10, then the power supply and control device 200 is switched on by means of a capacitive key 206 arranged on the top of the power supply and control device 200, then the LEDs 21 are switched on.

Any on/off, flashing selection or steady light controls may be provided on the power supply and control device 200 itself (for example by means of a capacitive key 206 arranged on the top of the power supply and control device 200 itself), or by means of a remote control fixed to the handlebar of the bicycle, tricycle, cargo bike or motorcycle, or may be provided on the mudguard itself (by means of a capacitive key incorporated into the mudguard assembly).

For a rear luminous mudguard 10 it is preferable to use one or more red LEDs, consistent with current regulations.

The luminous mudguard 10 can also be mounted on the two lateral wheels (rear or front) of tricycles and/or cargo bikes and has been indicated with 510 in Figures 1C-1D: in this case the luminous mudguard 510 comprises two luminous portions each similar to the semi-transparent portion 14, one of which is front and one rear.

Furthermore in this case, it is preferable that one or more LEDs of the front portion are white or yellow (as per current regulations), to signal the presence and width (i.e., the overall dimensions) of the vehicle to vehicles coming from the opposite direction of travel; one or more LEDs of the rear portion are instead red, in order to signal the presence and the overall dimensions of the vehicle to vehicles coming from behind the vehicle itself.

Furthermore, both luminous portions can also be provided with one or more amber LEDs (as per current regulations), which function as direction indicators: in this a remote control is fixed on the handlebar and allows the flashing of one or more amber LEDs on the left mudguard to signal a left turn or on the right mudguard to signal a right turn.

The mudguard can also be fully luminous, using RGB LEDs (red, green, blue), which combine the three basic colours and can produce up to 16 million shades of colour), so the mudguard can change colour and shade through a remote control or using specific smartphone applications connected to the vehicle provided with the luminous mudguard 10 by means of Bluetooth technology.

With regard to the fully luminous rear mudguard, an area (corresponding to the luminous portion 14) of red light and having a higher luminous intensity will be provided, as per current regulations.

In the case of tricycles and/or cargo bikes, the lateral mudguard comprises two luminous areas, one of which is white in the front and one which is red in the rear (as per current regulations), together with one or two areas of amber light, both front and rear, illuminated by one or more amber LEDs (for each area) acting as direction indicators (i.e., for turning right or left), as per current regulations.

The use of a large number of LEDs, preferably evenly distributed, both in length and width, will allow optimal visibility also on the side of the vehicle on which the mudguard is mounted, as well as on the rear and front (for tricycles and cargo bikes) even during the day, much greater with respect to that of the known rear lights for bicycles currently on the market.

Furthermore, the use of a large number of LEDs, suitably connected, ensures optimal operation even if there is a malfunction of one or more LEDs, as this does not result in switching off the others.

Figure 2C shows a sectional view of the luminous mudguard 10 of Figure 2A in which the electronic board 16 is made by means of the technology of three-dimensional electronics on plastic with the 3D MID process and is then indicated with the reference number 16b: in this case the thickness of the electronic board 16 is for example between 1.5 mm and 2.5 mm.

It can be seen in Figure 2C that the luminous mudguard 10 is formed by overlapping four at least partially overlapping layers that are formed (in order from bottom to top) by the mudguard base 12 with the recess 26, the electronic board 16b with three-dimensional electronics on plastic housed in the recess 26, the optical diffuser 30 and the cover 20 with the transparent or semi-transparent portion 14, in which the mudguard base 12 is the lowest layer and the cover 20 is the highest layer.

It should be noted that for simplicity all the elements shown in Figure 2C are shown flat, but in use will have a curved shape to follow the circular extension of the wheel tyre.

The previous observations related to Figure 2B (luminous mudguard 10 with electronic board 16 made with flexible electronics) are also applicable to Figure 2C, with the following differences.

The electronic board 16b is made of doped plastic material, as per 3D MID technology.

It can be seen that the electronic board 16b comprises an upper surface on which there are a plurality of ridges and depressions, above which there are respective flat pads on which the LEDs 21 and the other electronic components 22 are fixed.

It should be noted that LEDs 21 and the other electronic components 22 are fixed on respective flat pads of a ridge or a depression.

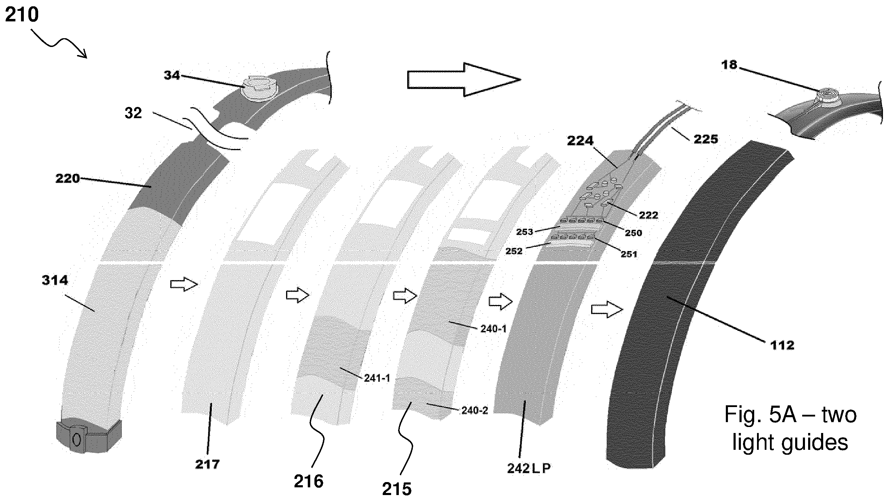

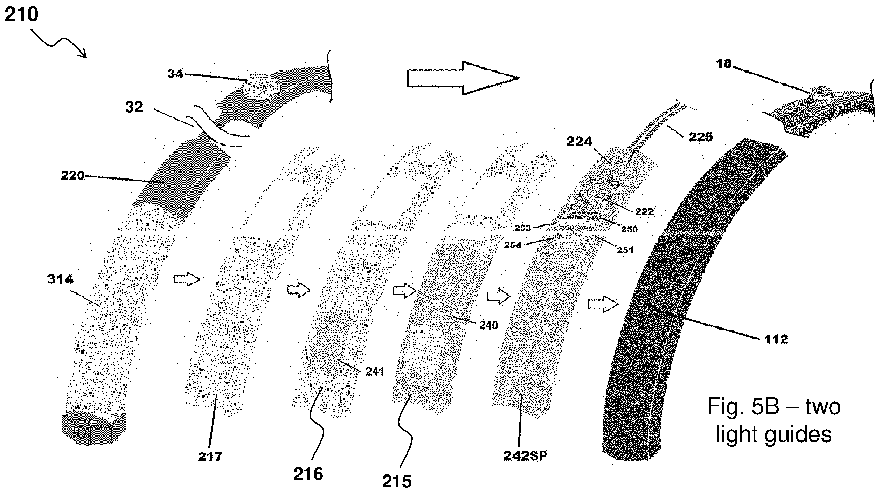

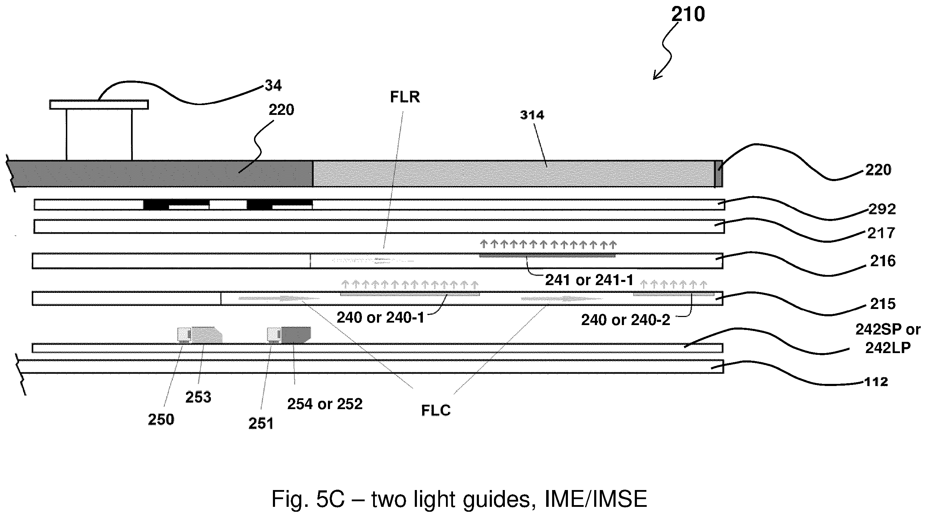

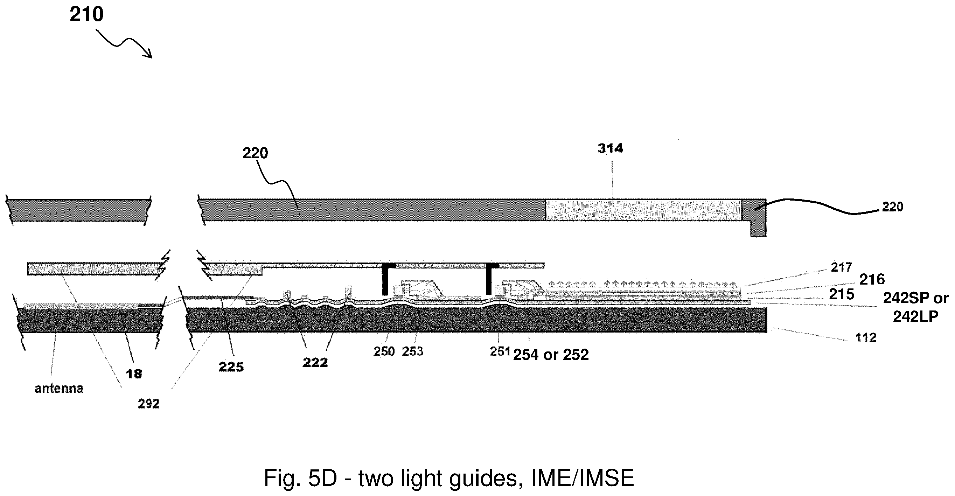

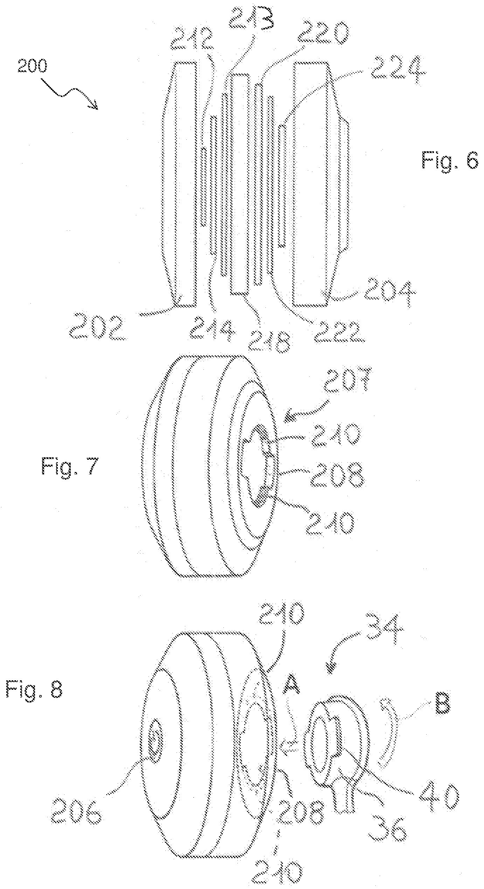

Differently, DE 202015001028 U1 discloses a luminous mudguard in which there are a plurality of LEDs that are positioned on a common base in an oblique position with respect to the illuminated surface, in order to vary the direction of the generated light beam; this is achieved for example by using (see Figures 5 and 6) a printed circuit board 15 of flexible material having a surface with undulating shape which forms a series of successivetops, each with a V-shapedinclined trough, in which an LED is fixed on the less steep flank of the V of each trough, so that all the LEDs have the same orientation (see par. 62).

During the thermoforming step, the electronic board 16b adheres to the mudguard base 12 and follows its curvature in the recess 26.

Alternatively, the electronic board 16b is already made in three-dimensional form and after fixing the LEDs 21 and the electronic components 22 on the electronic board 16b, it is inserted into the recess 26 and glued or heat-sealed.

Figure 2D shows a sectional view of the luminous mudguard 10 of Figure 2A in which the electronic board 16 is made by means of the technology of three-dimensional electronics on plastic with the IME/IMSE process and is then indicated with the reference number 16c: in this case the thickness of the electronic board 16 is for example between 0.2 mm and 0.5 mm.

It can be seen in Figure 2D that the luminous mudguard 10 is formed by overlapping four at least partially overlapping layers that are formed (in order from bottom to top) by the mudguard base 12 (without recess 26), the electronic board 16c with three-dimensional electronics on plastic overlapping the mudguard base 112, the optical diffuser 30 and the cover 20 with the transparent or semi-transparent portion 14, in which the mudguard base 112 is the lowest layer and the cover 20 is the highest layer.

It should be noted for simplicity that all the elements shown in Figure 2D are shown flat, but at the end of the manufacturing process (i.e., in use) they will have a curved shape that follows the circumferential extension of the bicycle wheel.

It can be seen in Figure 2D that the recess 26 is not present and therefore the mudguard base has been indicated with the reference number 112, to distinguish it from the mudguard base 12 of Fig.2B-2C in which the recess is present.

In this case the mudguard base 112 has an upper surface that is not flat, in particular the upper surface has a section profile with an undulating trend along the main circumferential extension of the mudguard base 112, by means of the presence of ridges and/or depressions.

Therefore, the electronic board 16c has a section profile with (after a thermoforming process) an undulating trend similar to that of the upper surface of the mudguard base 112, by means of the presence of ridges and/or depressions where there are respective flat pads on which the LEDs 21 and the other electronic components 22 are fixed.

During the thermoforming step, the electronic board 16c adheres to the upper surface of the mudguard base 112 following its undulating profile.

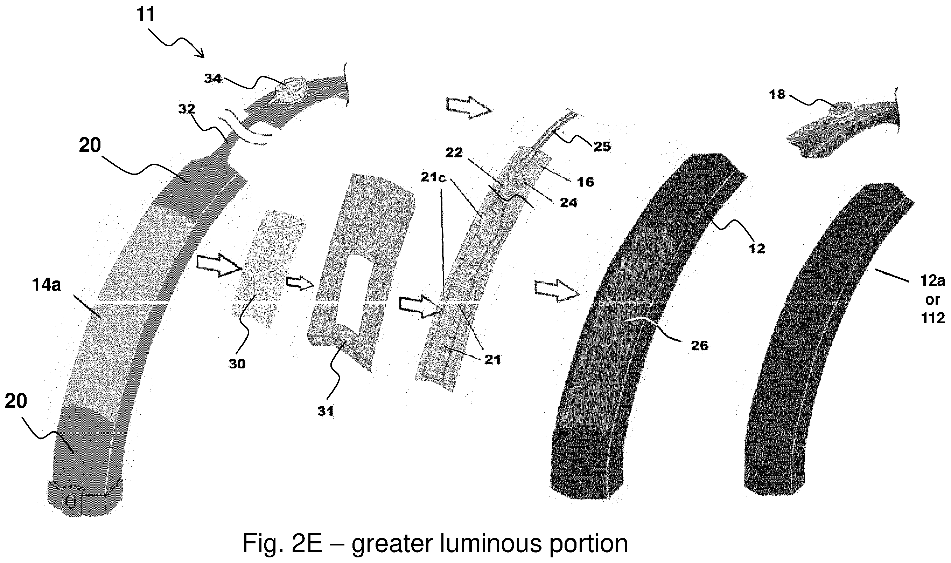

Figures 2E, 2F and 2G show a mudguard 11 that is illuminated by means of a backlighting in a portion 14a having a main circumferential extension with a greater extension than that of the main circumferential extension of the luminous portion 14 of the mudguard 10 of Figure 2A.

In particular, Figure 2E shows an exploded view of the luminous mudguard 11, Figure 2F shows a sectional view of the luminous mudguard 11 made with 3D-MID technology and Figure 2G shows a sectional view of the luminous mudguard 11 made with IME/IMSE technology.

Figure 2E differs from Figure 2A in that there is an additional optical diffuser 31 having the function of making a large portion 14a of the mudguard 11 luminous, i.e., the extension of the luminous portion 14a is greater than that of the luminous portion 14.

In particular, the luminous portion 14a has a main circumferential extension with a greater extension than that of the main circumferential extension of the luminous portion 14.

The optical diffuser 31 is overlapping the electronic board 16 in correspondence with the LEDs 21c and is made of the same material as the optical diffuser 30.

The electronic board 16 is indicated with 16bb in the case of being made with 3D-MID technology of Figure 2F and is indicated with 16cc in the case of being made with IME technology of Figure 2G.

The optical diffuser 30 is positioned in the centre of the optical diffuser 31 and this is in turn positioned for example in the centre of the mudguard 11, thus obtaining the rear light.

The shape of the optical diffuser 31 (understood as orthogonal projection of the perimeter of the optical diffuser 31 on a plane) is substantially rectangular and has a surface greater than the substantially rectangular surface of the optical diffuser 30 (whose surface is still understood as orthogonal projection of the perimeter of the optical diffuser 30 on a plane.

The LEDs 21c of the electronic board 16bb or 16cc are of the RGB type (Red-Green-Blue), i.e., they can emit a coloured light beam with colour emission between red and blue, by means of a suitable overlapping of the three primary colours red, green, blue.

The LEDs 21c are positioned below the optical diffuser 31.

By means of the presence of the two different optical diffusers 30, 31, it is possible to obtain a luminous portion 14a of the cover 20 having two different colours, such as the red colour in a more internal area (corresponding to the optical diffuser 30) having the function of a rear light and the green colour in a more external area (corresponding to the optical diffuser 31) having the function of making a large portion 14a of the mudguard 11 surrounding the rear light luminous and therefore making it coloured green.

This can be achieved, alternatively, by using:
- a plurality of LEDs 21 emitting a white light beam and the optical diffuser 30 in red, a plurality of LEDs 21c (RGB) emitting a green light beam and the optical diffuser 31 in white;
- a plurality of LEDs 21 emitting a red light beam and the optical diffuser 30 in white, a plurality of LEDs 21c (RGB) emitting a green light beam FLC and the optical diffuser 31 in white;
- a plurality of LEDs 21 emitting a red light beam and the optical diffuser 30 in red, a plurality of LEDs 21c (RGB) emitting a green light beam FLC and the optical diffuser 31 in white.

For example, a first red light beam is generated by a first group of LEDs 21 positioned on the electronic board 16bb or 16cc in correspondence with the optical diffuser 30 and a second light beam, for example green, is generated by a second group of LEDs 21c positioned on the electronic board 16bb or 16cc in correspondence with the optical diffuser 31:
- the first red light beam is incident on the optical diffuser 30 and is uniformly diffused therefrom, generating a red diffused light beam FLR, which illuminates the innermost part of the portion 14a (i.e., the one located in correspondence with the optical diffuser 30) in red;
- the second green light beam is incident on the optical diffuser 31 and is uniformly diffused therefrom, generating a green diffused light beam FLC, which illuminates the outermost part of the portion 14a (i.e., the one located in correspondence with the optical diffuser 31) in green.

Preferably, the mudguard 11 further comprises a pair of elements 41 interposed between the end portions of the optical diffuser 31 and the end portions of the portion 14a, having the function of protecting the LEDs 21, 21c and enclosing only in the optical diffusers 30, 31 all the light emitted by the LEDs 21, 21c without any further light dispersion.

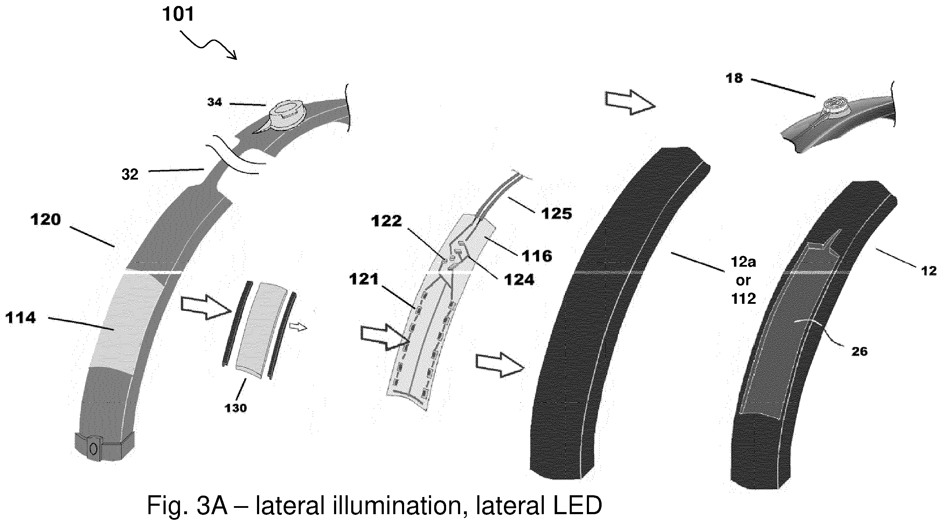

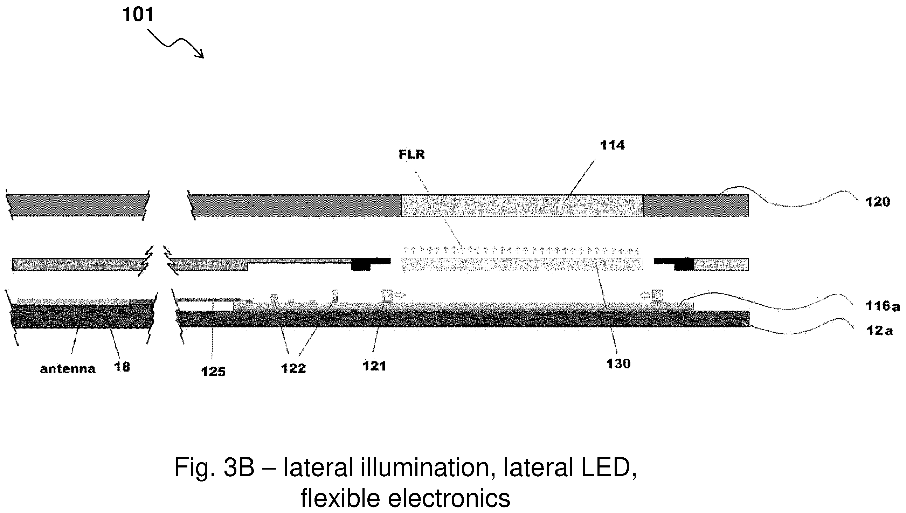

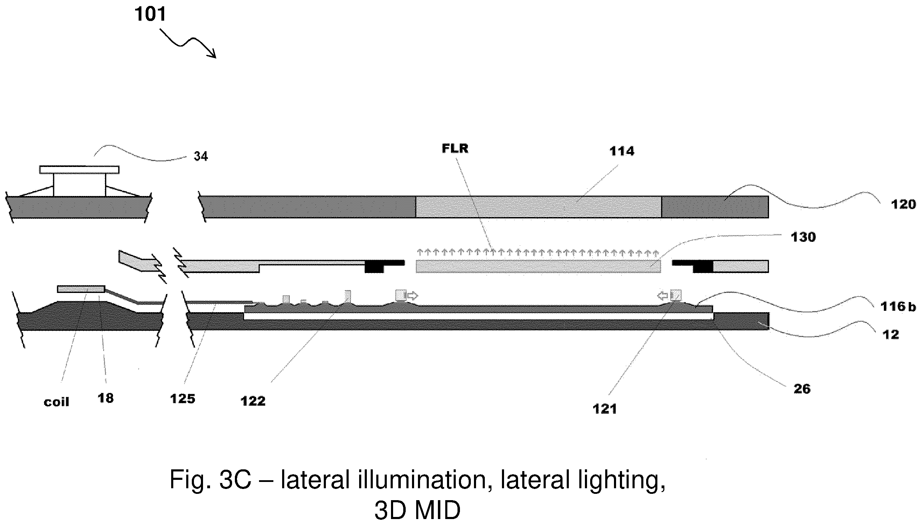

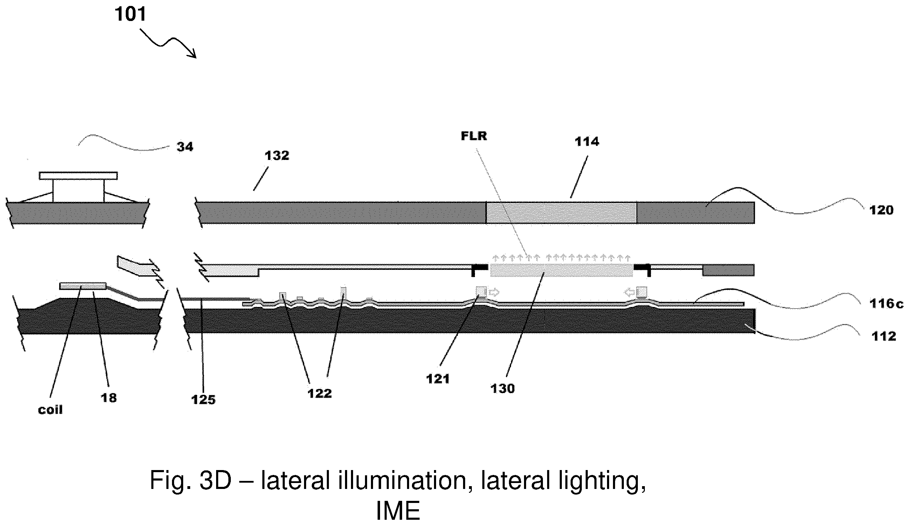

Figures 3A, 3B, 3C and 3D show a mudguard 101 that is illuminated by means of a lateral illumination in a portion 114.

In particular, Figure 3A shows an exploded view of the luminous mudguard 101, Figure 3B shows a sectional view of the luminous mudguard 101 of Figure 3A made with flexible electronics, Figure 3C shows a sectional view of the luminous mudguard 101 of Figure 3A made with 3D-MID technology and Figure 3D shows a sectional view of the luminous mudguard 101 of Figure 3A made with IME technology.

In particular, the electronic board 116 is indicated with:
- 116a in the case of being made with flexible electronics of Figures 3B;
- 116b in the case of being made with 3D-MID technology of Figure 3C;
- 116c in the case of being made with IME technology of Figure 3D.

Figure 3A differs from Figure 2A in that the side view LEDs 121 are mounted on the electronic board 116 only in correspondence with the end portions of the optical diffuser 130 (i.e., near the larger sides of a rectangular optical diffuser 130) and in that the LEDs 121 emit respective optical beams oriented towards the zone corresponding to the optical diffuser 130.

The use of LEDs 121 positioned laterally with respect to the optical diffuser 130 has the advantage (with respect to the LEDs 21 positioned in correspondence with the optical diffuser 30) of reducing the total thickness of the mudguard, of reducing the number of LEDs used and of allowing to create a wider luminous zone on the width of the mudguard.

The electronic board 116 of the mudguard 101 is made similarly to what was previously illustrated for the electronic board 16 of the mudguard 10, i.e., by means of flexible electronics (Figure 3B) and by means of some of the applications or methodologies used in three-dimensional electronics on plastic, for example 3D MID (Figure 3C) or IME (Figure 3D).

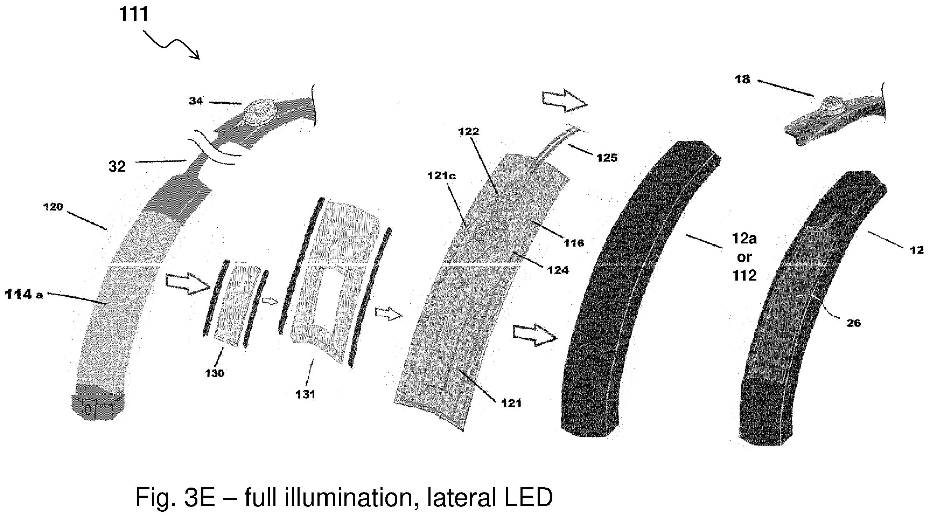

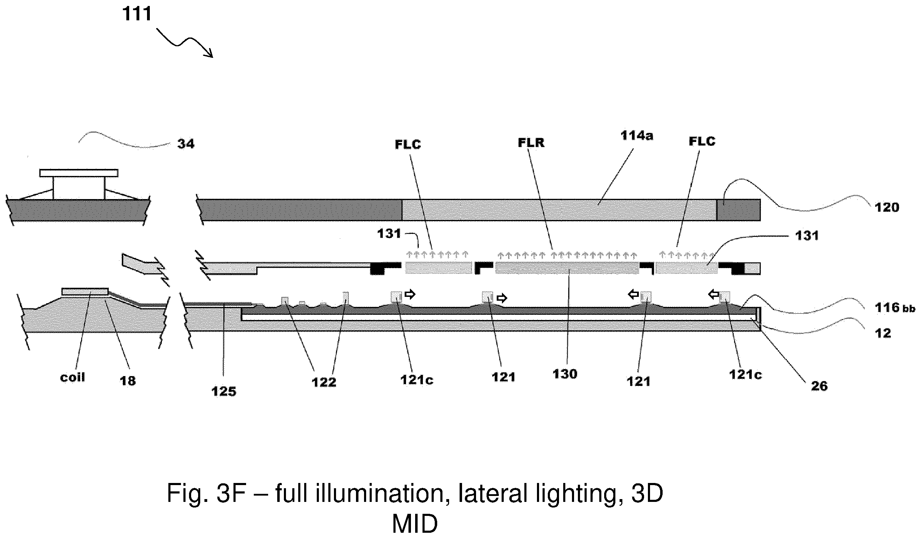

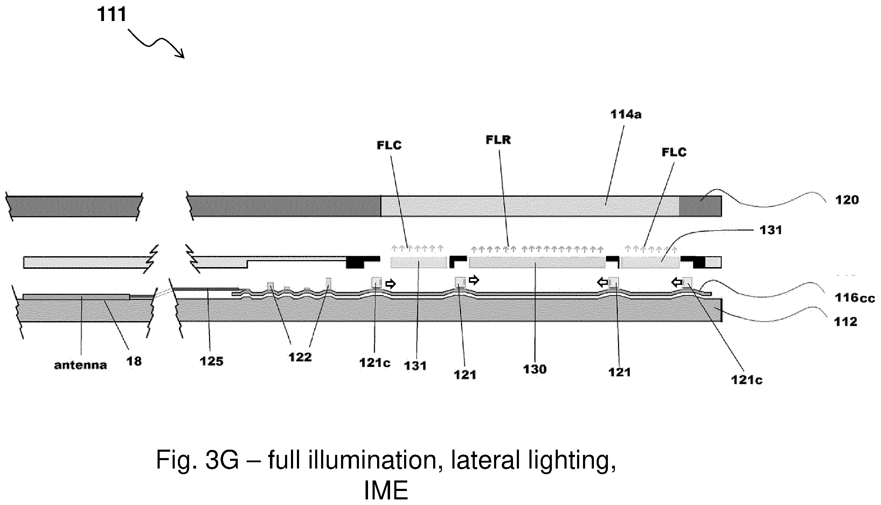

Figures 3E, 3F and 3G show a mudguard 111 that is illuminated by means of a lateral illumination in a luminous portion 114a having a mainly circumferential extension that is greater than that of the luminous portion 114 of the mudguard 101 of Figures 3A-3D.

In particular, Figure 3E shows an exploded view of the luminous mudguard 111, Figure 3F shows a sectional view of the luminous mudguard 111 made with 3D-MID technology and Figure 3G shows a sectional view of the luminous mudguard 111 made with IME technology.

In particular, the electronic board 116 is indicated with:
- 116bb in the case of being made with the 3D-MID technology of Figure 3F;
- 116cc in the case of being made with the IME technology of Figure 3G.

Figure 3E differs from Figure 3A in that there is an additional optical diffuser 131 overlapping the electronic board 116 in correspondence with the LEDs 121c and made of the same material as the optical diffuser 130.

The above considerations related to Figures 2E, 2F, 2G are applicable in a similar manner to Figures 3E, 3F, 3G, respectively, i.e., it is possible to obtain the luminous portion 114a of the cover 120 having two different colours, such as red in a more internal area corresponding to the optical diffuser 130 and green in a more external area corresponding to the optical diffuser 131.

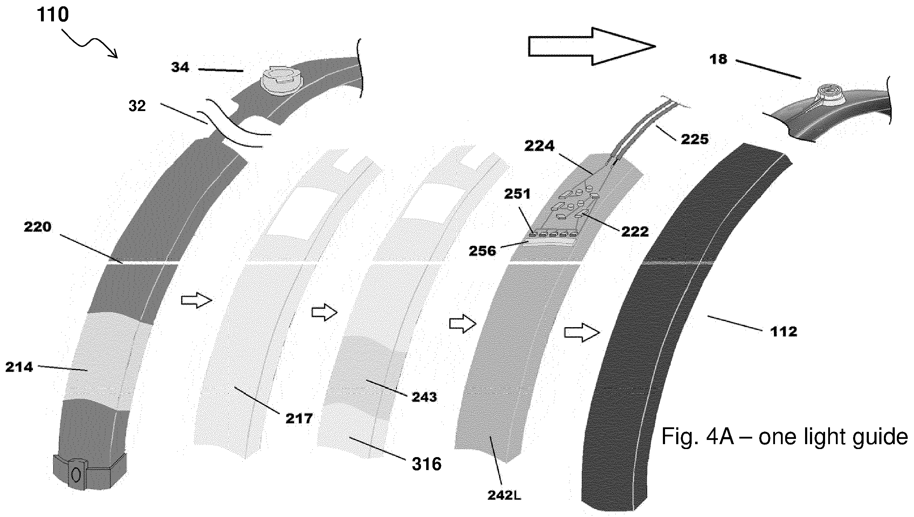

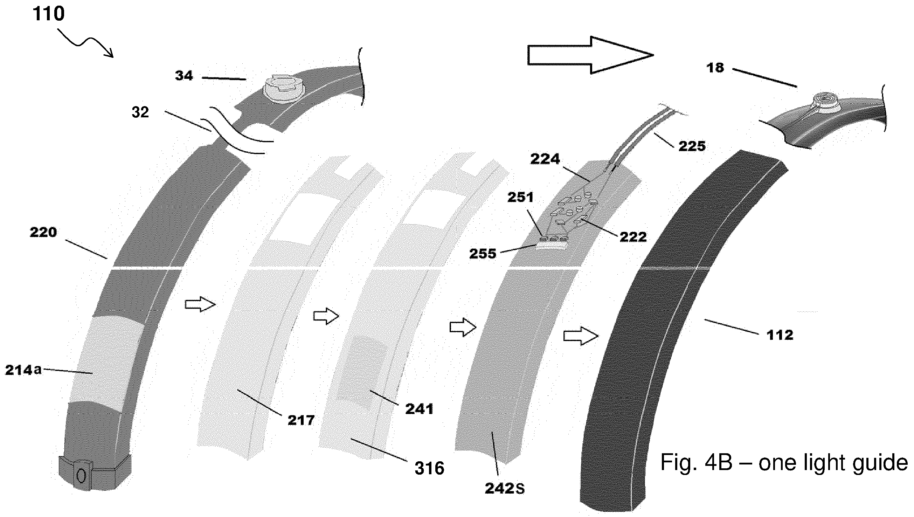

With reference to Figures 4A and 4B, two exploded views of a luminous mudguard 110 are shown in which only a portion 214 and 214a respectively of the mudguard 110 is made luminous by using an optical diffuser made with a light guide 316.

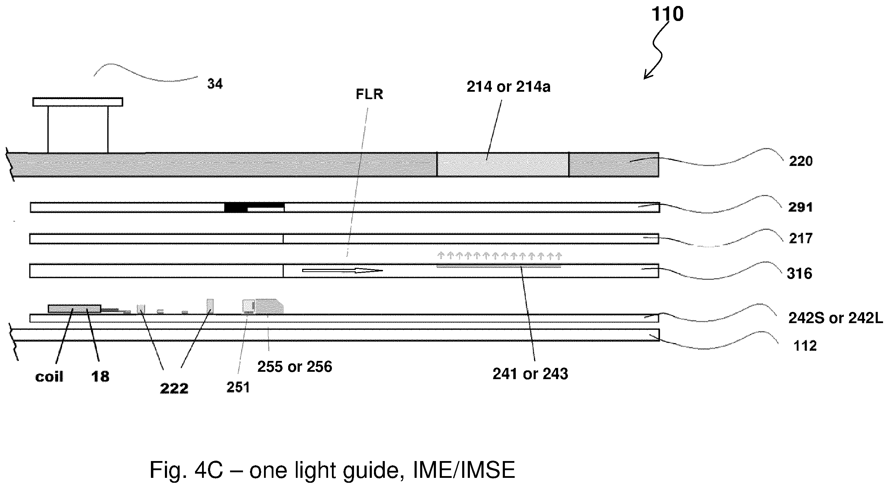

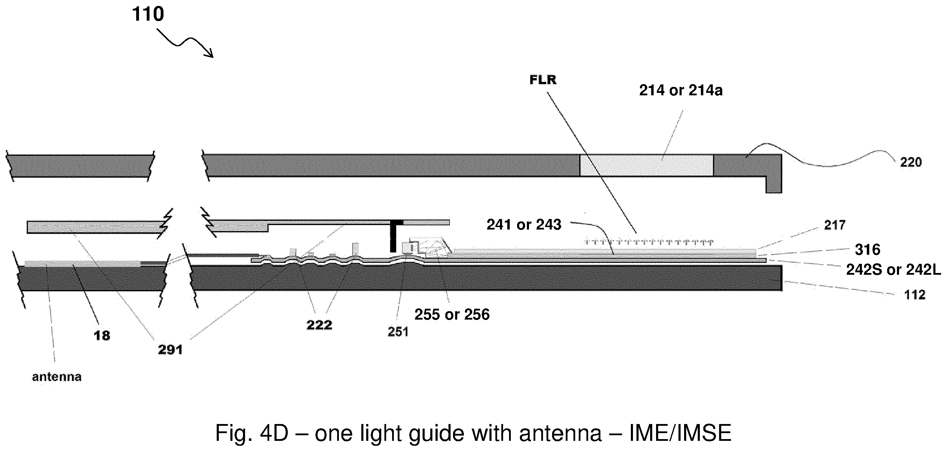

Figures 4C and 4D show an exploded sectional view and a partially exploded sectional view of the luminous mudguard 110 of Figures 4A and 4B made with IME or IMSE technology.

The luminous mudguard 110 of Figures 4A-4B and 4C-4D differs from the luminous mudguard 1 of Figures 2A and 2D in that it comprises the light guide 316 (instead of the optical diffuser 30) and further comprises an optical focusing device 256 or 255, respectively.

Figures 4A and 4B differ in that in Figure 4A a luminous mudguard 110 is made with a wider rear light (i.e., with a greater transverse extension extending along the entire width of the mudguard 110), while in Figure 4B a luminous mudguard 110 is made in which the rear light is narrower in width.

The mudguard 110 therefore comprises:
- a mudguard base 112;
- an electronic board 242 (indicated with 242L in Fig.4A and 242S in Fig.4B);
- one or more LEDs 251;
- further electronic components 222;
- the optical focusing device 256 or 255;
- the light guide 316;
- the power supply interface 18 positioned on an end portion of the mudguard base 112, near the bicycle frame;
- the electric cable 225;
- a cover 220 with a transparent or semi-transparent portion 214 or 214a;

- the coupling portion 34 of the cover 220.

The mudguard base 112 has a function, composition and geometric structure similar to that of the mudguard base 112 of Figure 2D.

The electronic board 242 has a function, composition and geometric structure similar to that of the electronic board 16c of Figure 2D.

The electronic board 242, 242S, 242L is made with the technology of three-dimensional electronics on plastic of the IME or IMSE type, in which the LEDs 251 and the other electronic components 222 are fixed directly on a polymer base in flat pads positioned on ridges and/or in depressions of the upper surface of the electronic board 242, similar to what has been illustrated above with regard to the description of Figure 2D.

The LEDs 251 (e.g., three) are positioned near the optical focusing device 256 or 255.

The optical focusing device 256 or 255 is optically coupled in input with the light beam generated by the LEDs 251 and is optically coupled in output with the light guide 316.

More in particular, the optical focusing device 256 or 255 has the function of receiving the light beam generated by the LEDs 251 and focusing it on the edge of the light guide 316, thereby generating a focused light beam that is injected into the light guide 316, in which said surface portion is for example an end portion of the light guide 316.

The term edge of the light guide 316 means the surface defined by the thickness of the light guide 316, for example in its secondary transverse extension direction.

The optical focusing device 256 or 255 is for example a convergent lens.

The light guide 316 is interposed between the electronic board 242 and the cover 220 and it is at least partially overlapping the electronic board 242 (also indicated with 242S and 242L).

The light guide 316 is suitably machined so as to accept in input a light beam only from the edge and so as to output a light beam only from a particular portion 243 or 241 of its surface, where the portion 243 or 241 makes a rear bicycle light; in particular, the portion 241 of the light guide 316 makes a rear light that is positioned at the centre of the mudguard 110 with respect to its width (see Figure 4B), while the portion 243 makes a rear light that extends substantially for the entire width of the mudguard 110 (see Figure 4A).

The light guide 316 has a main extension that is substantially circumferential so as to adapt to the circular shape of the wheel of the bicycle 1 and further has a secondary transverse extension (i.e., perpendicular to the main extension) that is much less than the main extension so as to adapt to the width of the bicycle wheel, where the transverse extension has a profile that may also be circumferential or substantially flat or trapezoidal.

The portion of input surface of the light guide 316 is for example positioned in correspondence with a first end portion of the main extension of the light guide 316, where said first end portion is adjacent to the output of the optical focusing device 256 or 255.

The output portion 243 or 241 of the light guide 316 (e.g., a portion of the upper surface of the light guide 316) is positioned in correspondence with the transparent portion 214 or 214a of the cover 220; for example, the portion 243 or 241 is positioned near a second end portion of the main extension of the light guide 316.

The LEDs 251 and the optical focusing device 256 or 255 are positioned on the electronic board 242 in correspondence with the first end portion of the light guide 316.

Furthermore, the output portion 243 or 241 of the light guide 316 has a surface with an extension that is at least partially overlapping the surface extension of the transparent portion 214 or 214a, so as to render the latter luminous.

The light guide 316 is thus configured to receive in input on the edge the focused light beam generated in output from the optical focusing device 256 or 255, where said input portion is positioned so as to be contiguous with the output of the optical focusing device 256 or 255.

Furthermore, the light guide 316 is configured to propagate the light beam from the input portion to the output portion 243 or 241 of the light guide 316, so as to uniformly diffuse the light beam propagated along the entire extension of the output portion 243 or 241.

Finally, the light guide 316 is configured to generate in output a light beam through the output portion 243 or 241, so as to uniformly illuminate the transparent portion 214 or 214a.

The electric cable 225 has a similar function to the electric cable 25, i.e., connecting the electronic board 242 with the power supply interface 18.

The cover 220 has a function, composition and geometric structure similar to that of the cover 20 of Figures 2A and 2D.

The cover 220 comprises the transparent or semi-transparent portion 214 or 214a with respect to the light beam transmitted in output from the light guide 316 through the portion 243 or 241, where said portion 214 or 214a may extend along the entire transverse extension of the rnudguard 110 (Figure 4A) or along a portion of the transverse extension (Figure 4B).

Preferably, the mudguard 110 further comprises a protective film 217, having the function of protecting, during the assembly work, the surface machining (portion 241 or 243) of the light guide 316s or 316L.

Advantageously, the light guide 316 is a flexible optical film made for example of PMMA (polymethylmethacrylate), PET, TPU or PC.

The optical film 316 is a very thin flexible film having a thickness of for example between 75 micrometres and 1.0 millimetres.

The optical film 316 may be made for example with one of the following flexible films:
- PLEXIGLAS LED or ACRILITE LED from the company Evonik;
- light-guiding film in thin plastic material, processed with light-guiding technology developed by the company FLEx Lighting (Chicago, USA), www.flexdighting.com;
- light-guiding film in thin plastic material (PC, PMMA, PET or TPU), processed with the technology developed by the company Nanocomp Oy (Lehmo, Finland), wwvv.nanocomp-fi.

The previous considerations related to the light guide 316 are applicable in a similar manner to the optical film, therefore the optical film 316 is configured to propagate the injected light beam towards the second portion 243 or 241, which outputs a light beam that uniformly illuminates the transparent or semi-transparent portion 214 or 214a.

Advantageously, the light guide 316 is co-moulded with the optical focusing device 256 (or 255), therefore they are made in a single piece.

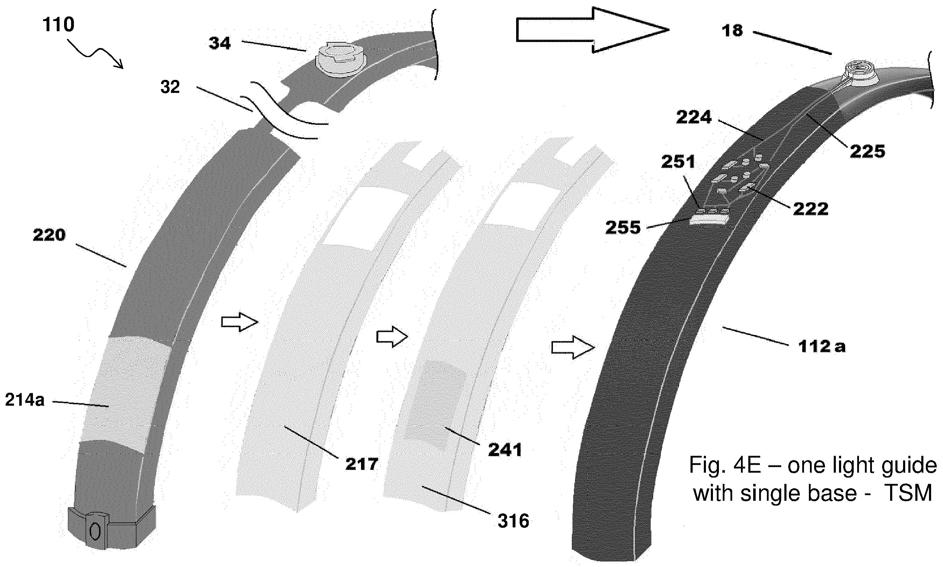

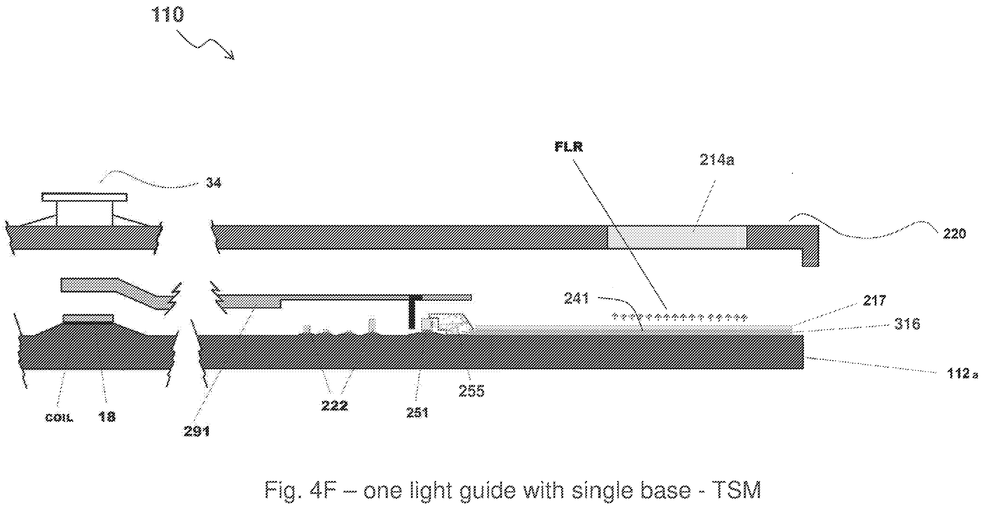

With reference to Figures 4E and 4F, an exploded view and a sectional view of the luminous mudguard 110 made with Two Shots Moulded technology are shown, respectively, if a light guide 316 made with a thin flexible optical film is used to propagate and uniformly diffuse the light beam towards the luminous portion 214a of the cover 220.

In this case, the mudguard base 12 and the electronic board 16b or 116b are integrated into a single polymer-based mudguard base indicated with the reference number 112a, which therefore performs both the function of protecting the cyclist from splashes of water, mud, stones, sand and dirt, and the function of an electronic board to electrically connect the LEDs 251 and the electronic components 222.

By means of the TSM process, the ridges and/or depressions are obtained on the upper surface of the mudguard base 112a (similarly to Figure 4D) and also the micro-grooves in which the metal tracks 224, 225 connecting the electronic components 222 with each other and/or with the power supply interface 18 are obtained.

It can be seen that the electronic components 222 are positioned in a reduced space and that the metal tracks 224, 225 have a reduced length: it is thereby possible to co-mould the polymeric material (doped with metal atoms) with the micro-grooves and thus obtain the single mudguard base 112a.

With reference to Figures 5A and 5B, two exploded views of a luminous mudguard 210 are shown in which a larger portion 214 and 214a, respectively, of the mudguard 110 is illuminated by using an optical diffuser made with two light guides 216 and 215.

Figures 5C and 5D show an exploded sectional view and a partially exploded sectional view of the luminous mudguard 210 of Figures 5A-5B made with IME or IMSE technology.

The mudguard 210 of Figures 5A-5D differs from the mudguard 110 of Figures 4A-4D in that the mudguard 210 comprises:
- two light guides 216, 215 (instead of a single light guide);

- two optical focusing devices 253 and 252 (Figure 5A) or 253 and 254 (Figure 5B) (instead of a single optical focusing device);
   - one or more RGB-type LEDs 250 (in addition to the one or more LEDs 251);
   - an electronic board 242 (indicated with 242LP in Fig.5A and indicated with 242SP in Fig.5B;
- the cover 220 having the transparent or semi-transparent portion 314.

The electronic board 242SP, 242LP is made with the technology of three-dimensional electronics on plastic of the IME or IMSE type, where the LEDs 251, 250 and the other electronic components 222 are fixed directly on a polymer base in flat pads positioned on ridges and/or in depressions of the upper surface of the board 242.

The set of the two light guides 216, 215 and the two optical focusing devices 253 and 252 (or 254) have the function of illuminating a large portion 314 of the mudguard 210, i.e., the extension of the luminous portion 314 is greater than that of the luminous portion 214 or 214a of the embodiments of Fig.4A-F with a light guide.

In particular, the luminous portion 314 has a main circumferential extension with a greater extension than that of the main circumferential extension of the luminous portion 214 or 214a.

The LEDs 251 (e.g., five) are positioned near the first optical focusing device 252 (or 254), while the LEDs 250 (e.g., five) are positioned near the second optical focusing device 253.

The first optical focusing device 252 (or 254) is optically coupled in input with the light beam generated by the LEDs 251 and is optically coupled in output with the first light guide 216.

More in particular, the first optical focusing device 252 (or 254) has the function of receiving the light beam generated by the LEDs 251 and focusing it on at least a portion of the edge of the first light guide 216, thereby generating a first focused light beam that is injected inside the first light guide 216.

The first optical focusing device 252 (or 254) is for example a convergent lens.

Similarly, the second optical focusing device 253 is optically coupled in input with the light beam generated by the LEDs 250 and is optically coupled in output with the second light guide 215.

More in particular, the second optical focusing device 253 has the function of receiving the light beam generated by the LEDs 250 and focusing it on at least a portion of the edge of the second light guide 215, thereby generating a focused light beam that is injected inside the second light guide 215.

The second optical focusing device 253 is for example a convergent lens.

The first light guide 216 is interposed between the second light guide and the cover 220 and is at least partially overlapping the electronic board 242LP (or 242SP).

Furthermore, the first light guide 216 is suitably machined so as to accept a light beam in input only from a particular portion of its edge and so as to generate a light beam in output only from another particular portion 241 (Figure 5B) or 241-1 (Figure 5A) of its surface, which implements a rear bicycle light; in particular, the portion 241 of the first light guide 216 implements a rear light that is positioned at the centre of the mudguard 210 with respect to its width (see Figure 5B), while the portion 241-1 implements a rear light that extends substantially for the entire width of the mudguard 210 (see Figure 5A).

It can be seen in Figures 5B-5C (mudguard 210 with central rear light) that the position of the output portion 241 of the first light guide 216 coincides with an unmachined central portion of the surface of the second light guide 215, i.e., said central portion of the second light guide 215 is positioned at the centre of the output portion 240 (machined) of the second light guide 215.

It can also be seen in Figures 5A-5C (mudguard 210 with full-width rear light) that the position of the output portion 241-1 of the first light guide 216 coincides with an unmachined portion interposed between the surface of the output portion 240-1 (machined) of the second light guide 215 and the surface of the output portion 240-2 (machined) of the second light guide 215.

The light guide 216 has a main extension that is substantially circumferential so as to adapt to the circular shape of the wheel of the bicycle 1 and further has a secondary transverse extension (i.e., perpendicular to the main extension) that is much less than the main extension so as to adapt to the width of the bicycle wheel, where the transverse extension has a profile that may also be circumferential or substantially flat or trapezoidal.

The portion 241 or 241-1 of the output surface (e.g., a portion of the upper surface of the first light guide 216) is positioned in correspondence with the transparent portion 314 of the cover 220; for example, the portion 241 or 241-1 is positioned near a second end portion of the main extension of the first light guide 216.

The LEDs 251 and the first optical focusing device 252 (or 254) are positioned on the electronic board 242SP or 242LP in correspondence with the first light guide 216.

Furthermore, the output portion 241 or 241-1 of the first light guide 216 has a surface with an extension that is at least partially overlapping the surface extension of the transparent portion 314, so as to make the latter luminous.

The first light guide 216 is then configured to receive in input on its edge the focused light beam generated in output from the first optical focusing device 252 (or 254), where said input portion is positioned so as to be contiguous with the output of the first optical focusing device 252 (or 254).

Furthermore, the light guide 216 is first configured to propagate the light beam from the input portion to the output portion 241 or 241-1 of the first light guide 216, so as to uniformly diffuse the light beam propagated along the entire extension of the output portion 241 or 241-1.

Finally, the first light guide 216 is configured to generate in output a light beam through the output portion 241 or 241-1, so as to uniformly illuminate a part of the transparent portion 314.

Advantageously, the first light guide 216 is co-moulded with the optical focusing device 252 (or 254), therefore they are made in a single piece.

Similarly, the second light guide 215 is interposed between the electronic board 242LP (or 242SP) and the cover 220 and is at least partially overlapping the electronic board 242LP (or 242SP).

Furthermore, the second light guide 215 is suitably machined so as to accept a light beam in input only from a particular portion of its edge and so as to generate a light beam in output only from another particular portion 240 of its surface (Figure 5B), or so as to generate a light beam in output from two different portions 240-1, 240-2 of its surface (Figure 5A): said one output portion 240 (or the two output portions 240-1, 240-2) has the function of contributing to make the mudguard 210 luminous in a wide zone surrounding that of the rear light.

The second light guide 215 has a main extension that is substantially circumferential so as to adapt to the circular shape of the wheel of the bicycle 1 and further has a secondary transverse extension (i.e., perpendicular to the main extension) that is much less than the main extension so as to adapt to the width of the bicycle wheel, where the transverse extension has a profile that may also be circumferential or substantially flat or trapezoidal.

The portion 240 of the output surface (e.g., a portion of the upper surface of the second light guide 215) is positioned in correspondence with the transparent portion 314 of the cover 220; for example, the portion 240 is positioned near a second end portion of the main extension of the second light guide 215.

The LEDs 250 and the second optical focusing device 253 are positioned on the electronic board 242SP or 242LP in correspondence with the edge of the second light guide 215.

Furthermore, the output portion 240 of the second light guide 215 has a surface with an extension that is at least partially overlapping the surface extension of the transparent portion 314, so as to make the latter luminous.

The second light guide 215 is then configured to receive in input on its edge the focused light beam generated in output from the second optical focusing device 253, where said input portion is positioned so as to be contiguous with the output of the second optical focusing device 253.

Furthermore, the second light guide 215 is configured to propagate the light beam from the input portion to the output portion 240 of the second light guide 215, so as to uniformly diffuse the light beam propagated along the entire extension of the output portion 240.

Finally, the second light guide 215 is configured to output a light beam through the output portion 240, so as to uniformly illuminate another part of the transparent portion 314, where the part illuminated by the output portion 240 is different from that illuminated by the output portion 241 or 241-1; in particular, the part of the transparent portion 314 illuminated by the output portion 240 is complementary to the part of the transparent portion 314 illuminated by the output portion 241 or 241-1, so as to make the entire extension of the transparent portion 314 luminous.

Advantageously, the second light guide 215 is co-moulded with the optical focusing device 253, therefore they are made in a single piece.

The cover 220 comprises the transparent or semi-transparent portion 314 with respect to the light beam transmitted in output from the first and second light guides 216, 215 respectively through the output portion 241, 240, where said portion 314 may extend along the entire transverse extension of the mudguard 210 (Figure 5A) or along a part of the transverse extension (Figure 5B).

By means of the presence of the two different light guides 216, 215 it is possible to obtain a luminous portion 314 of the cover 220 having two different colours, such as red in a more internal area (corresponding to the portion 240) having the function of a rear light and for example green in a more external area (corresponding to the portion 241) having the function of making a large portion 314 surrounding the rear light luminous.

This can be achieved, alternatively, by using:
- a plurality of LEDs 251 emitting a white light beam and the optical focusing device 252 or 254 in red, a plurality of RGB LEDs 250 emitting for example a green light beam and the focusing device 253 transparent.
- a plurality of LEDs 251 emitting for example a red light beam FLR and the optical focusing device 252 or 254 transparent, a plurality of RGB LEDs 250 emitting a green light beam FLC and the optical focusing device 253 transparent.
- a plurality of LEDs 251 emitting for example a red light beam FLR and the optical focusing device 252 or 254 in red, a plurality of RGB LEDs 250 emitting a green light beam FLC and the optical focusing device 253 transparent.

For example, a first red light beam is generated by a first group of LEDs 251 positioned on the electronic board 242SP or 242LP in correspondence with the first optical focusing device 252 (or 254), while a second green light beam is generated by a second group of LEDs 250 positioned on the electronic board 242SP or 242LP in correspondence with the second optical focusing device 253.
- the first red light beam is incident on the light guide 216 and is uniformly diffused therefrom generating a red diffused light beam FLR, which illuminates the innermost part of the portion 314 in red;
- the second green light beam is incident on the light guide 215 and is uniformly diffused therefrom generating a green diffused light beam FLC, which illuminates the outermost part of the portion 314 in green.

Preferably, the mudguard 210 further comprises a protective film 217, having the function of protecting, during assembly work, the surface machining (portion 241 or 241-1) of the light guides 215, 216.

Advantageously, each of the light guides 215, 216 is a flexible optical film made for example of PMMA (polymethylmethacrylate), PET, TPU or PC.

The optical film 215, 216 is a very thin flexible film having a thickness of for example between 75 micrometres and 1.0 millimetres and can be made for example with one of the following flexible films:
- PLEXIGLAS LED or ACRILITE LED from the company Evonik;
- light-guiding film in thin plastic material, processed with light-guiding technology developed by the company FLEx Lighting (Chicago, USA), www.flexlighting.com;
- light-guiding film in thin plastic material (PC, PMMA, PET or TPU), processed with the technology developed by the company Nanocomp Oy (Lehmo, Finland), www.nanocomp.fi.

Preferably, the mudguard 210 further comprises a pair of elements, having the function of protecting the LEDs 251 and 250 and enclosing only in the light guides 216, 215 all the light emitted by the LEDs 251, 250, without any further light dispersion.

Preferably, the luminous mudguard 10, 11, 101, 111, 110, 210 or 510 further comprises one or more sensors, the measurements of which allow to vary the brightness of the mounted LED(s) and/or switch off a part thereof, to modulate the overall brightness of the luminous portion 14, 14a, 114, 214 or 314.

For example, the luminous mudguard 10, 11, 101, 111, 110, 210 or 510 comprises an acceleration sensor, so that it is possible to signal braking or a significant decrease in speed with a higher luminous intensity, similar to car stops.

Preferably, the luminous mudguard 10, 11, 101, 111, 110, 210 or 510 further comprises an ambient light sensor, so that the LEDs independently switch on when the ambient light decreases or in the event of sudden darkness, for example when entering a tunnel, or switch off when the ambient light increases.

Preferably, the luminous mudguard 10, 11, 101, 111, 110, 210 or 510 further comprises a proximity sensor for detecting the presence of a vehicle following the bicycle, tricycle, cargo-bike or motorcycle at a short distance and that remains there for a certain period of time (e.g., another trailing cyclist); in this case, the intensity of the luminous portion 14, 14a, 114, 214 or 314 will be automatically reduced so as not to blind or disturb, with flashing, the cyclist at a short distance behind.

With reference to Figures 6, 7 and 8, the power supply and control device 200 is shown in more detail, having the function of supplying and controlling the operation of the luminous mudguard 10, 11, 101, 111, 110, 210 or 510, where said power supply and control device 200 is mounted for example on two-, three- or four-wheel vehicles driven by muscular or electric propulsion.

The power supply and control device 200 comprises a rechargeable portable battery 218 (also known as power bank), having the function of providing and receiving power in wireless mode, i.e., approaching a transmitter to a receiver without any need to connect it by cable or physical connection with the mains or with the device to be supplied.

This peculiar feature makes the power supply and control device 200 extremely advantageous for supplying the electronic components of the luminous mudguard 10, 11, 11, 110, 210 or 510, because in use the luminous mudguard is often subject to vibration, shock, humidity, water and dirt: in such conditions the use of wired electrical connections to supply the electronic components of the luminous mudguard 10, 110 would be subject to malfunctions, false contacts or breakage.

With reference to Figure 6, the power supply and control device 200 comprises an upper shell 202 and a lower shell 204.

A capacitive key 206 (see Figure 6) is positioned on the upper shell to control the switching on, off and selection of the flashing modes of the LEDs 22 or 122.

A female coupling 207 (Figure 7) compatible with a corresponding male coupling 40 provided on the coupling portion 34 is provided on the lower shell 204 (see Figure 8).

The male 34 and female 207 couplings thus allow a stable mechanical connection of the power supply and control device 200 with the luminous mudguard 10, 11, 101, 111, 110, 210 or 510.

Preferably, the male coupling 34 provides a cylindrical body 36 whose lateral surface has two lateral projections (see Fig.8).

The lateral projections are preferably flat.

The female coupling 207 provides a hollow 208 (Figure 7) having a section corresponding to that of the projection on a plane perpendicular to the axis of the cylindrical body 36 of the combination between the cylindrical body 36 and the projections of the male coupling 40: it is thereby possible to insert the male coupling 34 into the hollow 208 by translation along a direction "A" parallel to the axis of the cylindrical body 36 (see Figure 8).

The female coupling 207 (Figure 7) also comprises two grooves 210 adapted to accommodate the projections of the male coupling 40 following a rotation in a direction "B" of the male coupling 34 inside the hollow 208 (Figure 8).

By means of this shape of the lower shell 204 of the power supply and control device 200 and of the coupling portion 34 to the power supply and control device 200, it is thus possible to stably fix the power supply and control device 200 to the luminous mudguard 10, 11, 101, 111, 110, 210 or 510 and obtain the optimal distance for transmitting energy from the power supply and control device 200 to the luminous mudguard 10, 11, 101, 111, 110, 210 or 510 by a translation and rotation movement.

Of course, the number of projections of the male coupling 40 may be lower or higher, as well as their shape may vary, as long as the number and shape of the grooves 210 also consistently vary.

It should be noted that the male and female coupling may, of course, be reversed in position, with the male coupling provided on the power supply and control device 200 and the female coupling on the luminous mudguard 10, 11, 101, 111, 110, 210 or 510.

When the power supply and control device 200 is not mounted on the luminous mudguard 10, 11, 101, 111, 110, 210 or 510, this has no hollow that could fill with dirt during normal use, making it difficult to couple the power supply and control device 200.

Furthermore, wilen the power supply and control device 200 is not mounted on the luminous mudguard 10 or 110, it is stored such that a blockage of the hollow 208 or grooves 210 is highly unlikely.

With reference to Figure 6, within the upper and lower shells 202, 204 the power supply and control device 200 comprises several connected components.

Starting from the upper shell 202, in order, the power supply and control device 200 comprises:
A. an electronic board 212 provided with circuits for the capacitive key 206 for the switching on, off and flashing commands,
B. a rechargeable battery 218;
C. a receiving inductive coil 214, having the function of recharging the battery 218;
D. an electronic board 213 provided with receiving inductive coil control circuitry 214.
E. an electronic board 220 provided with rechargeable battery control circuits 218;
F. a transmitting inductive coil 224 for wirelessly supplying the luminous mudguard 10 or 110;
G. an electronic board 222 provided with transmitting inductive coil control circuits 224 and possible electronic control of the LEDs and the functions of the luminous mudguard.

Obviously, the four electronic boards 212, 213, 220 and 222 can be made in a single board, reducing implementation costs and spaces inside the power bank and consequently the external dimensions.

The mechanical connection between the power supply and control device 200 and the mudguard 10, 11, 101, 111, 110, 210 or 510 is obtained by the male coupling 40 of the coupling portion 34 of the mudguard and the female coupling 207 of the power supply and control device 200: this allows the transmitting inductive coil 224 of the power supply and control device 200 and the receiving inductive coil of the luminous mudguard 10, 11, 101, 111, 110, 210 or 510 to be kept fixed and with a reduced and predetermined distance.

Preferably, the transmitting inductive coil 224 is mechanically coupled with the receiving inductive coil of the luminous mudguard 10, 11, 101, 111, 110, 210 or 510 by means of a thin magnet placed together with the transmitting coil 224 and by means of a magnetic metal plate assembled together with the receiving inductive coil of the luminous mudguard 10, 11, 101, 111, 110, 210 or 510: the mechanical connection is thereby improved, ensuring a perfect mechanical coupling even in situations of strong stresses, such as strong vibrations, shocks or oscillations, allowing an optimal (wireless) power supply of the luminous mudguard in many conditions of use.

A further fixing method may provide one or more screws that ensure and guarantee sealing, alignment and wireless coupling.

Preferably, the power supply and control device 200 is charged wirelessly by means of the receiving coil 214; to this end, it is sufficient to place the power supply and control device 200 on a wireless charging device (known as a "charging pad"), with the upper shell 202 facing downwards.

Thereby the power supply and control device is completely devoid of electrical connectors on the surface of the outer shells; since the two shells, upper and lower, are sealed together, the power supply and control device 200 is waterproof and particularly resistant.

It is possible to replace the male 40 and female 207 couplings with a self-locking and self-centring slide coupling system, with the same principle of sealing the distance between the transmitting inductive coil 224 and the receiving inductive coil.

According to one aspect of the present invention, it is provided a rnanufacturing process of a luminous mudguard 10, 11, 101 or 111 using 3D-MID technology, in particular LDS or TSM, wherein the manufacturing process comprises the steps of:
a) providing a mudguard base 12;
b) providing a polymer-based material;
c) infection moulding a polymer-based layer and the mudguard base so as to obtain a moulded layer and the mudguard base having a main circumferential extension and generate a plurality of micro-grooves in the rnoulded layer, said moulding comprising the generation of an upper surface of the moulded layer comprising a plurality of ridges and/or depressions with respect to its main circumferential extension and with respect to its secondary transverse extension, in which said ridges and/or depressions comprise respective flat pads;
d) immersing the moulded layer in a plurality of galvanic baths in order to deposit a plurality of layers of metal in the micro-grooves, thereby generating a plurality of metal tracks;
e) fixing on the pads of the moulded layer at least one light emitting diode and a plurality of electronic components by means of a conductive glue, thereby obtaining a polymer-based three-dimensional electronic board 16, 116 having a main circumferential extension;
f) electrically connecting a power supply interface to the three-dimensional electronic board;
g) housing the three-dimensional electronic board in a recess 26 of the mudguard base;
h) overlapping at least one optical diffuser 30 or 31 or 130 or 131 on a portion of the electronic board;
i) providing a polymer-based cover 20 or 120 having a main circumferential extension, said cover comprising a portion 14 or 14a or 114 or 114a that is at least partially transparent with respect to a diffused light beam generated by the optical diffuser, said cover having a main circumferential extension;
j) overlapping at least partially the cover on the mudguard base, so that the at least partially transparent portion overlaps the optical diffuser;
k) fixing the cover to the mudguard base.

Preferably, in the case of LDS technology step b) comprises providing the layer of polymer-based material doped with metal atoms, and step c) comprises the sub-steps of:
c1) injection moulding said polymer-based layer and the mudguard base so as to obtain the moulded layer and the mudguard base having a main circumferential extension;
c2) tracing by ablation the plurality of micro-grooves on the surface of the moulded layer by means of a laser beam;
c3) activating the metal atoms contained in the polymer layer in the micro-grooves;

Furthermore, in the case of LDS technology, step d) comprises the sub-steps of:
d1) depositing, during a first galvanic bath, a first metal layer on the metal atoms in the micro-grooves;
d2) successively depositing at least two further metal layers in the micro-grooves.

Preferably, in the case of TSM technology, step a) comprises providing a mudguard base 112a with injection moulding a plurality of micro-grooves 224, 225, step by further comprises providing an additional polymer-based material doped with metal atoms, in step c) the injection moulding further comprises injection moulding the doped polymer material into the micro-grooves, and step d) comprises depositing, during a first galvanic bath, a first metal layer on the doped polymer material in the micro-grooves, and successively comprises depositing at least two further metal layers in the micro-grooves, thereby generating a single mudguard base 112a with the integrated metal tracks 224, 225.

Preferably, in the case of TSM technology, in step h) overlapping the at least one optical diffuser comprises overlapping a light guides 316 on at least a portion of the single mudguard base 112a, where the light guide is made of a flexible optical film, step e) comprises fixing an optical focusing device 255 or 256 on a pad of the moulded layer, so that the at least one light emitting diode 251 and the optical focusing device 255 or 256 are positioned on the single mudguard base 112a in correspondence with an input portion of the optical film and so that the optical focusing device is adapted to receive the light beam generated by the at least one diode and focus it on the input portion of the light guide, and step j) comprises overlapping the at least partially transparent portion 214 or 214a of the cover on an output portion 241 or 243 of the optical film.

According to a further aspect of the present invention, it is provided a manufacturing process of a luminous mudguard 110 using IME/IMSE technology, wherein the manufacturing process comprises the steps of:
a) providing a mudguard base 112 having an upper surface comprising a plurality of ridges and/or depressions;
b) providing a layer 242S or 242L of polymer-based material;
c) tracing a plurality of metal tracks 224 on the polymer substrate, by means of at least one conductive ink;
d) fixing on the polymer substrate at least one light emitting diode 251 and a plurality of electronic components 222, thereby obtaining an electronic board;
e) fixing an optical focusing device 255 or 256 at least partially on the polymer substrate or at least partially on the mudguard base;
f) thermoforming the electronic board on the upper surface of the mudguard base so as to make the electronic board adhere to the mudguard base, thereby obtaining a three-dimensional electronic board 242L or 242S and the mudguard base having a main circumferential extension,
   wherein said thermoforming comprises:
   - generating an undulating section profile of the electronic board that adapts to the upper surface of the mudguard base, thereby generating an upper surface of the three-dimensional electronic board comprising said plurality of ridges and/or depressions with respect to its main circumferential extension and with respect to its transverse extension, in which said ridges and/or depressions comprise respective flat pads on which the at least one light emitting diode and the plurality of electronic components are fixed;
g) electrically connecting a power supply interface to the three-dimensional electronic board:
h) overlapping a light guide 316 implemented with a flexible optical film on at least one portion of the three-dimensional electronic board;
i) providing a polymer-based cover 220 having a main circumferential extension, said cover comprising a portion 214 or 214a that is at least partially transparent with respect to a diffused light beam generated by the optical diffuser, said cover having a main circumferential extension;
i) overlapping at least partially the cover on the mudguard base, so that the at least partially transparent portion overlaps the optical diffuser;
j) fixing the cover to the mudguard base.

## Claims

1. Luminous mudguard (10, 11, 101, 111) for vehicle wheels, in particular for a bicycle, tricycle, quadricycle, cargo bike, electric bicycle, motorcycle or motor vehicle with internal combustion engine, the mudguard comprising:
- a mudguard base (12, 12a, 112) having a main circumferential extension;
- a polymer-based three-dimensional electronic board (16, 116) overlapping a portion of the mudguard base and having a main circumferential extension, the electronic board comprising at least one light emitting diode (21, 21c, 121, 121c), a plurality of electronic components (22, 122) and metal tracks (24, 124) for electrically connecting the plurality of electronic components and the at least one light emitting diode, wherein said electronic board comprises a plurality of ridges and/or depressions with respect to its main circumferential extension and with respect to its secondary transverse extension, wherein said ridges and/or depressions comprise respective flat pads adapted to place and fix said plurality of electronic components and the at least one light emitting diode;
- a power supply interface (18) electrically connected with the electronic board and configured to generate electric power for supplying the at least one light emitting diode and the plurality of electronic components;
- an optical diffuser (30, 31; 130, 131) at least partially overlapping a portion of the electronic board, the optical diffuser being configured to diffuse a light beam generated by the at least one light emitting diode and generate therefrom a diffused light beam (FLR);
- a polymer-based cover (20, 120) at least partially overlapping the mudguard base and having a main circumferential extension, said cover comprising a portion (14, 14a, 114, 114a) that is at least partially transparent with respect to the diffused light beam, wherein said at least partially transparent portion is overlapping the optical diffuser, such that said diffused light beam illuminates said at least partially transparent portion.

2. Luminous mudguard (110) according to claim 1, further comprising an optical focusing device (256, 255) configured to receive the light beam generated by the at least one diode and generate therefrom a focused optical beam,
wherein the optical diffuser is a light guide (316) interposed between the electronic board (242L, 242S) and the cover (220) and is at least partially overlapping the electronic board,
the light guide being made of a flexible optical film comprising an input portion configured to receive the focused optical beam and comprising an output portion (241, 243) configured to generate the diffused light beam towards the at least partially transparent portion (214, 214a) of the cover (220),
wherein the at least one light emitting diode (251) and the optical focusing device (256, 255) are positioned on the electronic board (242S, 242L) in correspondence with a portion of the optical film,
and wherein the optical film is configured to:
- receive the focused light beam at the input portion of the optical film and inject it into the optical film;
- propagate the injected light beam towards the output portion (241, 243) of the optical film, wherein the at least partially transparent portion (214, 214a) of the cover (220) is at least partially overlapping the output portion (241, 243) of the optical film.

3. Luminous mudguard (10, 11, 101, 111, 110, 210) according to claims 1 or 2, wherein the upper surface of the mudguard base (112) comprises a plurality of ridges and/or depressions with respect to its main circumferential extension and comprises respective flat pads on the ridges and/or inside the depressions, wherein the electronic board (16c, 16cc, 116c, 116cc; 242L, 242S, 242LP, 242SP) comprises an undulating section profile comprising said plurality of ridges and/or depressions, wherein the position of the ridges of the upper surface of the mudguard base (112) coincides with the position of the ridges of the three-dimensional electronic board (16c, 16cc, 116c, 116cc; 242L, 242S, 242LP, 242SP), and wherein the position of the depressions of the upper surface of the mudguard base (112) coincides with the position of the depressions of the three-dimensional electronic board (16c, 16cc, 116c, 116cc; 242L, 242S, 242LP, 242SP).

4. Luminous mudguard (110) according to any one of the preceding claims, wherein the mudguard base and the electronic board are made of a single polymer base (112a) having a main circumferential extension and comprising at least one light emitting diode (251), the plurality of electronic components (222) and the metal tracks (224, 225),
wherein said single polymer base and said plurality of ridges and/or depressions are co-moulded,
and wherein said single polymer base comprises said plurality of ridges and/or depressions.

5. Luminous mudguard (210) according to claim 1, further comprising:
- at least one further light emitting diode (250) of the Red-Green-Blue type;
- a first optical focusing device (254, 252) configured to receive the light beam generated by the at least one diode (251) and generate therefrom a first focused optical beam (FLR);
- a second optical focusing device (253) configured to receive the light beam generated by the at least one further diode (250) and generate therefrom a second focused optical beam (FLC);
wherein the optical diffuser comprises a first (216) and a second (215) light guide, wherein:
• the second light guide (215) is interposed between the electronic board (242LP, 242SP) and the first light guide and it is at least partially overlapping the electronic board (242LP, 242SP);
• the first light guide (216) is interposed between the second light guide (215) and the cover (220) and it is at least partially overlapping the electronic board (242LP, 242SP);
the first light guide (216) being implemented with a first flexible optical film comprising an input portion configured to receive the first focused optical beam (FLR) and comprising an output portion (241, 241-1) configured to generate a first light beam diffused towards a first part of the at least partially transparent portion (314),
the second light guide (215) being implemented with a second flexible optical film comprising an input portion configured to receive the second focused optical beam (FLC) and comprising an output portion (240; 240-1, 240-2) configured to generate a second diffused light beam towards a second part of the at least partially transparent portion (314), in particular said second part being complementary to said first part so as to entirely illuminate the at least partially transparent portion (314) of the cover (220),
wherein the at least one light emitting diode (251) and the first optical focusing device (254, 252) are positioned on the electronic board (242SP, 242LP) in correspondence with a portion of the first optical film (216),
wherein the at least one further light emitting diode (250) and the second optical focusing device (253) are positioned on the electronic board (242SP, 242LP) in correspondence with a portion of the second optical film (215),
wherein the first optical film (216) is configured to:
- receive the first focused light beam (FLR) at the input portion of the first optical film and inject it inside the first optical film;
- propagate the first injected light beam towards the output portion (241, 241-1) of the first optical film, wherein the at least partially transparent portion (314) of the cover (220) is at least partially overlapping the output portion (241, 241-1) of the first optical film;
and wherein the second optical film (215) is configured to:
- receive the second focused light beam (FLC) at the input portion of the second optical film and inject it inside the second optical film;
- propagate the second injected light beam towards the output portion (240; 240-1, 240-2) of the second optical film, wherein the at least partially transparent portion (314) of the cover (220) is at least partially overlapping the output portion (240; 240-1, 240-2) of the second optical film.

6. Luminous mudguard according to any one of the preceding claims, wherein the power supply interface is a short-range wireless power receiver, selected among:
- a magnetic induction coupling receiver, comprising an inductive coil electrically connected with the plurality of electronic components and with the at least one light emitting diode, the inductive coil being configured to supply the at least one diode and the plurality of electronic components by means of the inductive coupling with another coil of a power supply and control device (200);
- a magnetic resonance coupling receiver, comprising a magnetic resonance coil connected with the plurality of electronic components and with the at least one light emitting diode, the resonance coil being configured to supply the at least one diode and the plurality of electronic components by means of the magnetic resonance coupling at a same frequency with another coil of a power supply and control device (200);
- a capacitive coupling receiver, comprising a metal plate electrically connected with the plurality of electronic components and with the at least one light emitting diode, the metal plate being configured to supply the at least one diode and the plurality of electronic components by means of an electrical coupling with another metal plate of a power supply and control device (200);
- a radio-frequency receiver comprising a flexible antenna positioned at least partially along the circumferential extension of the mudguard, the antenna being electrically connected with the plurality of electronic components and with the at least one light emitting diode, the antenna being further configured to supply the at least one diode and the plurality of electronic components by means of an electric current generated by a radio-frequency electromagnetic field transmitted from another antenna of a power supply and control device (200).

7. Luminous mudguard according to any one of claims 1 to 5, wherein the power supply interface is an electrical power supply cable.

8. Luminous mudguard according to claim 6 or 7, further comprising a portion (34) for mechanical coupling to a device (200) configured to supply and control the at least one light emitting diode and the plurality of electronic components,
wherein said coupling portion encloses the power supply interface, in particular the inductive coil, the resonance coil, the metal plate or at least one portion of the antenna.

9. Kit comprising a luminous mudguard according to claim 6 or claim 8 when dependent on claim 6 and a power supply and control device (200) of the luminous mudguard, the device comprising:
- a battery (218);
- a wireless power transmitter (224) electrically connected to the battery;
- an upper shell (202) and a lower shell (204);
- means (207) for locking to the mudguard;
wherein the battery, the transmitter and the receiver are interposed between the upper shell and the lower shell,
wherein the wireless power receiver of the mudguard is coupled with the wireless power transmitter (224) of the power supply and control device (200), so as to transfer energy from the battery to the mudguard to supply the at least one light emitting diode and the plurality of electronic components,
the mudguard further comprising locking means (34, 40) adapted to be mechanically connected with the locking means (207) of the power supply and control device.

10. Vehicle comprising at least two wheels, in particular a bicycle or a tricycle or quadricycle, the vehicle comprising a luminous mudguard according to any one of claims 1 to 8.

11. Process for manufacturing a luminous mudguard (10, 11, 101, 111), comprising the steps of:
a) providing a mudguard base (12);
b) providing a polymer-based material;
c) injection moulding a polymer-based layer and the mudguard base so as to obtain a moulded layer and the mudguard base having a main circumferential extension and generate a plurality of micro-grooves in the moulded layer, said moulding comprising the generation of an upper surface of the moulded layer comprising a plurality of ridges and/or depressions with respect to its main circumferential extension and with respect to its secondary transverse extension, wherein said ridges and/or depressions comprise respective flat pads;
d) immersing the moulded layer in a plurality of galvanic baths in order to deposit a plurality of layers of metal in the micro-grooves, thereby generating a plurality of metal tracks (24, 124);
e) fixing on the pads of the moulded layer at least one light emitting diode and a plurality of electronic components by means of a conductive glue, thereby obtaining a polymer-based three-dimensional electronic board (16, 116) having a main circumferential extension;
f) electrically connecting a power supply interface to the three-dimensional electronic board;
g) housing the three-dimensional electronic board in a recess (26) of the mudguard base;
h) overlapping at least one optical diffuser (30, 31, 130, 131) on a portion of the electronic board;
i) providing a polymer-based cover (20, 120) having a main circumferential extension, said cover comprising a portion (14, 14a, 114, 114a) that is at least partially transparent with respect to a diffused light beam generated by the optical diffuser, said cover having a main circumferential extension;
j) overlapping at least partially the cover on the mudguard base, so that the at least partially transparent portion overlaps the optical diffuser;
k) fixing the cover to the mudguard base.

12. Manufacturing process according to claim 11,
wherein step b) comprises providing the polymer-based material doped with metal atoms, and wherein step c) comprises:
c1) injection moulding said polymer-based layer and the mudguard base so as to obtain the moulded layer and the mudguard base having a main circumferential extension;
c2) tracing by ablation the plurality of micro-grooves on the surface of the moulded layer by means of a laser beam;
c3) activating the metal atoms contained in the polymer layer in the micro-grooves;
and wherein step d) comprises:
d1) depositing, during a first galvanic bath, a first metal layer on the metal atoms in the micro-grooves;
d2) successively depositing at least two further metal layers in the micro-grooves.

13. Manufacturing process of a luminous mudguard (110) according to claim 11, wherein:
- step a) comprises providing a mudguard base (112a) with a plurality of micro-grooves (224, 225) injection moulded therein;
- step b) comprises further providing a further layer of polymer-based material doped with metal atoms,
- in step c) the injection moulding further comprises injection moulding the doped polymer material in the micro-grooves;
- step d) comprises:
• depositing, during a first galvanic bath, a first metal layer on the doped polymer material in the micro-grooves; and
• subsequently depositing at least two further metal layers in the micro-grooves, thereby generating a single mudguard base (112a) with the integrated metal tracks (224, 225).

14. Manufacturing process according to claim 13,
wherein in step h) the overlapping of the at least one optical diffuser comprises overlapping a light guide (316) on at least one portion of the single mudguard base (112a), wherein the light guide is implemented with a flexible optical film;
and wherein step e) comprises fixing an optical focusing device (255, 256) on a pad of the moulded layer, so that the at least one light emitting diode (251) and the optical focusing device (255, 256) are positioned on the single mudguard base (112a) at an input portion of the optical film and so that the optical focusing device is adapted to receive the light beam generated by the at least one diode and focus it on the input portion of the light guide,
and wherein step j) comprises overlapping the at least partially transparent portion (214, 214a) of the cover on an output portion (241, 243) of the optical film.

15. Process for manufacturing a luminous mudguard (110), comprising the steps of:
a) providing a mudguard base (112) having an upper surface comprising a plurality of ridges and/or depressions;
b) providing a layer (242S, 242L) of polymer-based material;
c) tracing a plurality of metal tracks (224) on the polymer substrate, by means of at least one conductive ink;
d) fixing on the polymer substrate at least one light emitting diode (251) and a plurality of electronic components (222), thereby obtaining an electronic board;
e) fixing an optical focusing device (255, 256) at least partially on the polymer substrate or at least partially on the mudguard base;
f) thermoforming the electronic board on the upper surface of the mudguard base so as to make the electronic board adhere to the mudguard base, thereby obtaining a three-dimensional electronic board (242L, 242S) and the mudguard base having a main circumferential extension,
wherein said thermoforming comprises:
- generating an undulating section profile of the electronic board that fits to the upper surface of the mudguard base, thereby generating an upper surface of the three-dimensional electronic board comprising said plurality of ridges and/or depressions with respect to its main circumferential extension and with respect to its transverse extension, wherein said ridges and/or depressions comprise respective flat pads on which the at least one light emitting diode and the plurality of electronic components are fixed;
g) electrically connecting a power supply interface to the three-dimensional electronic board;
h) overlapping a light guide (316) implemented with a flexible optical film on at least one portion of the three-dimensional electronic board;
i) providing a polymer-based cover (220) having a main circumferential extension, said cover comprising a portion (214, 214a) that is at least partially transparent with respect to a diffused light beam generated by the optical diffuser, said cover having a main circumferential extension;
i) overlapping at least partially the cover on the mudguard base, so that the at least partially transparent portion overlaps the optical diffuser;
j) fixing the cover to the mudguard base.

## Patentansprüche

1. Leuchtschutzblech (10, 11, 101, 111) für Fahrzeugräder, insbesondere für ein Fahrrad, Dreirad, Vierrad, Lastenfahrrad, Elektrofahrrad, Motorrad oder Kraftfahrzeug mit Verbrennungsmotor, wobei das Schutzblech Folgendes umfasst:
- eine Schutzblechbasis (12, 12a, 112) mit einer Hauptumfangserstreckung;
- eine dreidimensionale elektronische Platine (16, 116) auf Polymerbasis, die einen Abschnitt der Schutzblechbasis überlappt und eine Hauptumfangserstreckung aufweist, wobei die elektronische Platine mindestens eine Leuchtdiode (21, 21c, 121, 121c), eine Vielzahl von elektronischen Komponenten (22, 122) und Metallbahnen (24, 124) zum elektrischen Verbinden der Vielzahl von elektronischen Komponenten und der mindestens einen Leuchtdiode umfasst, wobei die elektronische Platine eine Vielzahl von Erhöhungen und/oder Vertiefungen in Bezug auf ihre Hauptumfangserstreckung und in Bezug auf ihre sekundäre Quererstreckung umfasst, wobei die Erhöhungen und/oder Vertiefungen jeweilige flache Polster umfassen, die dazu angepasst sind, die Vielzahl von elektronischen Komponenten und die mindestens eine Leuchtdiode zu platzieren und befestigen;
- eine Stromversorgungsschnittstelle (18), die elektrisch mit der elektronischen Platine verbunden und so ausgelegt ist, dass sie Strom zum Versorgen der mindestens einen Leuchtdiode und der Vielzahl von elektronischen Komponenten erzeugt;
- einen optischen Diffusor (30, 31; 130, 131), der zumindest teilweise einen Abschnitt der elektronischen Platine überlappt, wobei der optische Diffusor so ausgelegt ist, dass er einen von der mindestens einen Leuchtdiode erzeugten Lichtstrahl streut und daraus einen diffusen Lichtstrahl (FLR) erzeugt;
- eine Abdeckung (20, 120) auf Polymerbasis, die zumindest teilweise die Schutzblechbasis überlappt und eine Hauptumfangserstreckung aufweist, wobei die Abdeckung einen Abschnitt (14, 14a, 114, 114a) umfasst, der in Bezug auf den diffusen Lichtstrahl zumindest teilweise transparent ist, wobei der zumindest teilweise transparente Abschnitt den optischen Diffusor überlappt, so dass der diffuse Lichtstrahl den zumindest teilweise transparenten Abschnitt beleuchtet.

2. Leuchtschutzblech (110) nach Anspruch 1, ferner umfassend eine optische Fokussiervorrichtung (256, 255), die so ausgelegt ist, dass sie den von der mindestens einen Diode erzeugten Lichtstrahl empfängt und daraus einen fokussierten optischen Strahl erzeugt,
wobei der optische Diffusor ein Lichtleiter (316) ist, der zwischen der elektronischen Platine (242L, 242S) und der Abdeckung (220) eingefügt ist und die elektronische Platine zumindest teilweise überlappt, wobei der Lichtleiter aus einer flexiblen optischen Folie besteht, die einen Eingangsabschnitt umfasst, der so ausgelegt ist, dass er den fokussierten optischen Strahl empfängt, und einen Ausgangsabschnitt (241, 243) umfasst, der so ausgelegt ist, dass er den diffusen Lichtstrahl in Richtung des zumindest teilweise transparenten Abschnitts (214, 214a) der Abdeckung (220) erzeugt,
wobei die mindestens eine Leuchtdiode (251) und die optische Fokussiervorrichtung (256, 255) auf der elektronischen Platine (242S, 242L) entsprechend einem Abschnitt der optischen Folie positioniert sind,
und wobei die optische Folie so ausgelegt ist, dass sie:
- den fokussierten Lichtstrahl am Eingangsabschnitt der optischen Folie empfängt und in die optische Folie injiziert;
- den injizierten Lichtstrahl in Richtung des Ausgangsbereichs (241, 243) der optischen Folie weiterleitet, wobei der zumindest teilweise transparente Abschnitt (214, 214a) der Abdeckung (220) den Ausgangsbereich (241, 243) der optischen Folie zumindest teilweise überlappt.

3. Leuchtschutzblech (10, 11, 101, 111, 110, 210) nach den Ansprüchen 1 oder 2, wobei die Oberseite der Schutzblechbasis (112) eine Vielzahl von Erhöhungen und/oder Vertiefungen in Bezug auf ihre Hauptumfangserstreckung umfasst und entsprechende flache Polster auf den Erhöhungen und/oder innerhalb der Vertiefungen umfasst, wobei die elektronische Platine (16c, 16cc, 116c, 116cc; 242L, 242S, 242LP, 242SP) ein wellenförmiges Querschnittsprofil umfasst, das die Vielzahl von Erhöhungen und/oder Vertiefungen umfasst, wobei die Position der Erhöhungen der Oberseite der Schutzblechbasis (112) mit der Position der Erhöhungen der dreidimensionalen elektronischen Platine (16c, 16cc, 116c, 116cc; 242L, 242S, 242LP, 242SP) übereinstimmt, und wobei die Position der Vertiefungen der Oberseite der Schutzblechbasis (112) mit der Position der Vertiefungen der dreidimensionalen elektronischen Platine (16c, 16cc, 116c, 116cc; 242L, 242S, 242LP, 242SP) übereinstimmt.

4. Leuchtschutzblech (110) nach einem der vorhergehenden Ansprüche, wobei die Schutzblechbasis und die elektronische Platine aus einer einzelnen Polymerbasis (112a) bestehen, die eine Hauptumfangserstreckung aufweist und mindestens eine Leuchtdiode (251), die Vielzahl von elektronischen Komponenten (222) und die Metallbahnen (224, 225) umfasst,
wobei die einzelne Polymerbasis und die Vielzahl von Erhöhungen und/oder Vertiefungen im Verbund geformt sind,
und wobei die einzelne Polymerbasis die Vielzahl von Erhöhungen und/oder Vertiefungen umfasst.

5. Leuchtschutzblech (210) nach Anspruch 1, ferner umfassend:
- mindestens eine weitere Leuchtdiode (250) vom Typ Rot-Grün-Blau;
- eine erste optische Fokussiervorrichtung (254, 252), die so ausgelegt ist, dass sie den von der mindestens einen Diode (251) erzeugten Lichtstrahl empfängt und daraus einen ersten fokussierten optischen Strahl (FLR) erzeugt;
- eine zweite optische Fokussiervorrichtung (253), die so ausgelegt ist, dass sie den von der mindestens einen weiteren Diode (250) erzeugten Lichtstrahl empfängt und daraus einen zweiten fokussierten optischen Strahl (FLC) erzeugt;
wobei der optische Diffusor einen ersten (216) und einen zweiten (215) Lichtleiter umfasst, wobei:
• der zweite Lichtleiter (215) zwischen der elektronischen Platine (242LP, 242SP) und dem ersten Lichtleiter eingefügt ist und die elektronische Platine (242LP, 242SP) zumindest teilweise überlappt;
• der erste Lichtleiter (216) zwischen dem zweiten Lichtleiter (215) und der Abdeckung (220) eingefügt ist und die elektronische Platine (242LP, 242SP) zumindest teilweise überlappt;
wobei der erste Lichtleiter (216) mit einer ersten flexiblen optischen Folie implementiert ist, die einen Eingangsabschnitt umfasst, der so ausgelegt ist, dass er den ersten fokussierten optischen Strahl (FLR) empfängt, und einen Ausgangsabschnitt (241, 241-1) umfasst, der so ausgelegt ist, dass er einen ersten Lichtstrahl erzeugt, der in Richtung eines ersten Teils des zumindest teilweise transparenten Abschnitts (314) gestreut wird, der zweite Lichtleiter (215) mit einer zweiten flexiblen optischen Folie implementiert ist, die einen Eingangsabschnitt umfasst, der so ausgelegt ist, dass er den zweiten fokussierten optischen Strahl (FLC) empfängt, und einen Ausgangsabschnitt (240; 240-1, 240-2) umfasst, der so ausgelegt ist, dass er einen zweiten diffusen Lichtstrahl in Richtung eines zweiten Teils des zumindest teilweise transparenten Abschnitts (314) erzeugt, wobei insbesondere der zweite Teil komplementär zum ersten Teil ist, um den zumindest teilweise transparenten Abschnitt (314) der Abdeckung (220) vollständig zu beleuchten,
wobei die mindestens eine Leuchtdiode (251) und die erste optische Fokussiervorrichtung (254, 252) auf der elektronischen Platine (242SP, 242LP) entsprechend einem Abschnitt der ersten optischen Folie (216) positioniert sind,
wobei die mindestens eine weitere Leuchtdiode (250) und die zweite optische Fokussiervorrichtung (253) auf der elektronischen Platine (242SP, 242LP) entsprechend einem Abschnitt der zweiten optischen Folie (215) positioniert sind,
wobei die erste optische Folie (216) so ausgelegt ist, dass sie:
- den ersten fokussierten Lichtstrahl (FLR) am Eingangsabschnitt der ersten optischen Folie empfängt und in die erste optische Folie injiziert;
- den ersten injizierten Lichtstrahl in Richtung des Ausgangsbereichs (241, 241- 1) der ersten optischen Folie weiterleitet, wobei der zumindest teilweise transparente Abschnitt (314) der Abdeckung (220) den Ausgangsabschnitt (241, 241-1) der ersten optischen Folie zumindest teilweise überlappt;
und wobei die zweite optische Folie (215) so ausgelegt ist, dass sie:
- den zweiten fokussierten Lichtstrahl (FLC) am Eingangsabschnitt der zweiten optischen Folie empfängt und in die zweite optische Folie injiziert;
- den zweiten injizierten Lichtstrahl in Richtung des Ausgangsabschnitts (240; 240-1, 240-2) der zweiten optischen Folie weiterleitet, wobei der zumindest teilweise transparente Abschnitt (314) der Abdeckung (220) den Ausgangsabschnitt (240; 240-1, 240-2) der zweiten optischen Folie zumindest teilweise überlappt.

6. Leuchtschutzblech nach einem der vorhergehenden Ansprüche, wobei die Stromversorgungsschnittstelle ein drahtloser Nahbereichs-Stromempfänger ist, ausgewählt aus:
- einem magnetischen Induktionskupplungsempfänger, umfassend eine induktive Spule, die elektrisch mit der Vielzahl von elektronischen Komponenten und mit der mindestens einen Leuchtdiode verbunden ist, wobei die induktive Spule so ausgelegt ist, dass sie die mindestens eine Diode und die Vielzahl von elektronischen Komponenten mittels der induktiven Kupplung mit einer anderen Spule einer Stromversorgungs- und Steuervorrichtung (200) versorgt;
- einem Magnetresonanzkupplungsempfänger, umfassend eine Magnetresonanzspule, die mit der Vielzahl von elektronischen Komponenten und mit der mindestens einen Leuchtdiode verbunden ist, wobei die Resonanzspule so ausgelegt ist, dass sie die mindestens eine Diode und die Vielzahl von elektronischen Komponenten mittels der Magnetresonanzkupplung mit derselben Frequenz wie eine andere Spule einer Stromversorgungs- und Steuervorrichtung (200) versorgt;
- einem kapazitiven Kupplungsempfänger, umfassend eine Metallplatte, die elektrisch mit der Vielzahl von elektronischen Komponenten und mit der mindestens einen Leuchtdiode verbunden ist, wobei die Metallplatte so ausgelegt ist, dass sie die mindestens eine Diode und die Vielzahl von elektronischen Komponenten mittels einer elektrischen Kupplung mit einer anderen Metallplatte einer Stromversorgungs- und Steuervorrichtung (200) versorgt;
- einem Hochfrequenzempfänger, umfassend eine flexible Antenne, die zumindest teilweise entlang der Umfangserstreckung des Schutzblechs positioniert ist, wobei die Antenne elektrisch mit der Vielzahl von elektronischen Komponenten und mit der mindestens einen Leuchtdiode verbunden ist, wobei die Antenne ferner so ausgelegt ist, dass sie die mindestens eine Diode und die Vielzahl von elektronischen Komponenten mittels eines elektrischen Stroms versorgt, der durch ein hochfrequentes elektromagnetisches Feld erzeugt wird, das von einer anderen Antenne einer Stromversorgungs- und Steuervorrichtung (200) übertragen wird.

7. Leuchtschutzblech nach einem der Ansprüche 1 bis 5, wobei die Stromversorgungsschnittstelle ein Stromversorgungskabel ist.

8. Leuchtschutzblech nach Anspruch 6 oder 7, ferner umfassend einen Abschnitt (34) zur mechanischen Kupplung mit einer Vorrichtung (200), die so ausgelegt ist, dass sie die mindestens eine Leuchtdiode und die Vielzahl von elektronischen Komponenten versorgt und steuert,
wobei der Kupplungsabschnitt die Stromversorgungsschnittstelle, insbesondere die induktive Spule, die Resonanzspule, die Metallplatte oder zumindest einen Abschnitt der Antenne, umschließt.

9. Kit, umfassend ein Leuchtschutzblech nach Anspruch 6 oder Anspruch 8, wenn abhängig von Anspruch 6, und eine Stromversorgungs- und Steuervorrichtung (200) des Leuchtschutzblechs, wobei die Vorrichtung Folgendes umfasst:
- eine Batterie (218);
- einen drahtlosen Stromsender (224), der elektrisch mit der Batterie verbunden ist;
- ein oberes Gehäuse (202) und ein unteres Gehäuse (204);
- Mittel (207) zum Befestigen am Schutzblech;
wobei die Batterie, der Sender und der Empfänger zwischen dem oberen Gehäuse und dem unteren Gehäuse eingefügt sind,
wobei der drahtlose Stromempfänger des Schutzblechs mit dem drahtlosen Stromsender (224) der Stromversorgungs- und Steuervorrichtung (200) gekoppelt ist, um Strom von der Batterie zum Schutzblech zu übergeben, um die mindestens eine Leuchtdiode und die Vielzahl von elektronischen Komponenten zu versorgen,
wobei das Schutzblech ferner Verriegelungsmittel (34, 40) umfasst, die dazu angepasst sind, mechanisch mit den Verriegelungsmitteln (207) der Stromversorgungs- und Steuervorrichtung verbunden zu werden.

10. Fahrzeug, umfassend mindestens zwei Räder, insbesondere ein Fahrrad oder ein Dreirad oder ein Vierrad, wobei das Fahrzeug ein Leuchtschutzblech nach einem der Ansprüche 1 bis 8 umfasst.

11. Verfahren zur Herstellung eines Leuchtschutzblechs (10, 11, 101, 111), umfassend die folgenden Schritte:
a) Bereitstellen einer Schutzblechbasis (12);
b) Bereitstellen eines Materials auf Polymerbasis;
c) Spritzgießen einer Schicht auf Polymerbasis und der Schutzblechbasis, um eine geformte Schicht und die Schutzblechbasis mit einer Hauptumfangserstreckung zu erhalten und eine Vielzahl von Mikrorillen in der geformten Schicht zu erzeugen, wobei das Formen das Erzeugen einer Oberseite der geformten Schicht umfasst, die eine Vielzahl von Erhöhungen und/oder Vertiefungen in Bezug auf ihre Hauptumfangserstreckung und in Bezug auf ihre sekundäre Quererstreckung umfasst, wobei die Erhöhungen und/oder Vertiefungen jeweils flache Polster umfassen;
d) Eintauchen der geformten Schicht in mehrere galvanische Bäder, um eine Vielzahl von Metallschichten in den Mikrorillen aufzutragen, wodurch eine Vielzahl von Metallbahnen (24, 124) erzeugt wird;
e) Befestigen mindestens einer Leuchtdiode und einer Vielzahl von elektronischen Komponenten auf den Polstern der geformten Schicht mittels eines leitenden Klebers, wodurch eine dreidimensionale elektronische Platine (16, 116) auf Polymerbasis mit einer Hauptumfangserstreckung erhalten wird;
f) elektrisches Verbinden einer Stromversorgungsschnittstelle mit der dreidimensionalen elektronischen Platine;
g) Aufnehmen der dreidimensionalen elektronischen Platine in eine Ausnehmung (26) der Schutzblechbasis;
h) Überlappen mindestens eines optischen Diffusors (30, 31, 130, 131) auf einem Abschnitt der elektronischen Platine;
i) Bereitstellen einer Abdeckung (20, 120) auf Polymerbasis mit einer Hauptumfangserstreckung, wobei die Abdeckung einen Abschnitt (14, 14a, 114, 114a) umfasst, der in Bezug auf einen vom optischen Diffusor erzeugten diffusen Lichtstrahl zumindest teilweise transparent ist, wobei die Abdeckung eine Hauptumfangserstreckung aufweist;
j) zumindest teilweises Überlappen der Abdeckung an der Schutzblechbasis, so dass der zumindest teilweise transparente Abschnitt den optischen Diffusor überlappt;
k) Befestigen der Abdeckung an der Schutzblechbasis.

12. Herstellungsverfahren nach Anspruch 11,
wobei Schritt b) das Bereitstellen des mit Metallatomen dotierten Materials auf Polymerbasis umfasst, und wobei Schritt c) Folgendes umfasst:
c1) Spritzgießen der Schicht auf Polymerbasis und der Schutzblechbasis, um die geformte Schicht und die Schutzblechbasis mit einer Hauptumfangserstreckung zu erhalten;
c2) Markieren der Vielzahl von Mikrorillen auf der Oberfläche der geformten Schicht mittels eines Laserstrahls durch Ablation;
c3) Aktivieren der in der Polymerschicht enthaltenen Metallatome in den Mikrorillen;
und wobei Schritt d) Folgendes umfasst:
d1) Auftragen einer ersten Metallschicht auf die Metallatome in den Mikrorillen während eines ersten galvanischen Bades;
d2) aufeinanderfolgendes Auftragen von mindestens zwei weiteren Metallschichten in die Mikrorillen.

13. Herstellungsverfahren eines Leuchtschutzblechs (110) nach Anspruch 11, wobei:
- Schritt a) das Bereitstellen einer Schutzblechbasis (112a) mit einer Vielzahl von darin spritzgegossenen Mikrorillen (224, 225) umfasst;
- Schritt b) das weitere Bereitstellen einer weiteren Schicht aus einem mit Metallatomen dotierten Material auf Polymerbasis umfasst,
- in Schritt c) das Spritzgießen ferner das Spritzgießen des dotierten Polymermaterials in die Mikrorillen umfasst;
- Schritt d) Folgendes umfasst:
• Auftragen einer ersten Metallschicht auf das dotierte Polymermaterial in den Mikrorillen während eines ersten galvanischen Bades; und
• anschließendes Auftragen von mindestens zwei weiteren Metallschichten in den Mikrorillen, wodurch eine einzelne Schutzblechbasis (112a) mit den integrierten Metallbahnen (224, 225) erzeugt wird.

14. Herstellungsverfahren nach Anspruch 13,
wobei in Schritt h) das Überlappen des mindestens einen optischen Diffusors das Überlappen eines Lichtleiters (316) auf mindestens einem Abschnitt der einzelnen Schutzblechbasis (112a) umfasst, wobei der Lichtleiter mit einer flexiblen optischen Folie implementiert ist;
und wobei Schritt e) das Befestigen einer optischen Fokussiervorrichtung (255, 256) auf einem Polster der geformten Schicht umfasst, so dass die mindestens eine Leuchtdiode (251) und die optische Fokussiervorrichtung (255, 256) auf der einzelnen Schutzblechbasis (112a) an einem Eingangsabschnitt der optischen Folie positioniert sind und so dass die optische Fokussiervorrichtung dazu angepasst ist, den von der mindestens einen Diode erzeugten Lichtstrahl zu empfangen und auf den Eingangsabschnitt des Lichtleiters zu fokussieren,
und wobei Schritt j) das Überlappen des mindestens teilweise transparenten Abschnitts (214, 214a) der Abdeckung auf einem Ausgangsabschnitt (241, 243) der optischen Folie umfasst.

15. Verfahren zur Herstellung eines Leuchtschutzblechs (110), umfassend die folgenden Schritte:
a) Bereitstellen einer Schutzblechbasis (112) mit einer Oberseite, die eine Vielzahl von Erhöhungen und/oder Vertiefungen umfasst;
b) Bereitstellen einer Schicht (242S, 242L) aus einem Material auf Polymerbasis;
c) Markieren einer Vielzahl von Metallbahnen (224) auf das Polymersubstrat mittels mindestens einer leitenden Tinte;
d) Befestigen mindestens einer Leuchtdiode (251) und einer Vielzahl von elektronischen Komponenten (222) auf dem Polymersubstrat, wodurch eine elektronische Platine erhalten wird;
e) Befestigen einer optischen Fokussiervorrichtung (255, 256) mindestens teilweise auf dem Polymersubstrat oder mindestens teilweise auf der Schutzblechbasis;
f) Thermoformen der elektronischen Platine auf der Oberseite der Schutzblechbasis, um die elektronische Platine an der Schutzblechbasis haften zu lassen, wodurch eine dreidimensionale elektronische Platine (242L, 242S) und die Schutzblechbasis mit einer Hauptumfangserstreckung erhalten werden,
wobei das Thermoformen Folgendes umfasst:
- Erzeugen eines wellenförmigen Querschnittsprofils der elektronischen Platine, das an die Oberseite der Schutzblechbasis angepasst ist, wodurch eine Oberseite der dreidimensionalen elektronischen Platine erzeugt wird, die die Vielzahl von Erhöhungen und/oder Vertiefungen in Bezug auf ihre Hauptumfangserstreckung und in Bezug auf ihre Quererstreckung umfasst, wobei die Erhöhungen und/oder Vertiefungen jeweilige flache Polster umfassen, auf denen die mindestens eine Leuchtdiode und die Vielzahl von elektronischen Komponenten befestigt sind;
g) elektrisches Verbinden einer Stromversorgungsschnittstelle mit der dreidimensionalen elektronischen Platine;
h) Überlappen eines Lichtleiters (316), der mit einer flexiblen optischen Folie auf mindestens einem Abschnitt der dreidimensionalen elektronischen Platine implementiert ist;
i) Bereitstellen einer Abdeckung (220) auf Polymerbasis mit einer Hauptumfangserstreckung, wobei die Abdeckung einen Abschnitt (214, 214a) umfasst, der in Bezug auf einen vom optischen Diffusor erzeugten diffusen Lichtstrahl zumindest teilweise transparent ist, wobei die Abdeckung eine Hauptumfangserstreckung aufweist;
i) zumindest teilweises Überlappen der Abdeckung an der Schutzblechbasis, so dass der zumindest teilweise transparente Abschnitt den optischen Diffusor überlappt;
j) Befestigen der Abdeckung an der Schutzblechbasis.

## Revendications

1. Garde-boue lumineux (10, 11, 101, 111) pour roues de véhicule, en particulier pour un vélo, un tricycle, un quadricycle, un vélo-cargo, un vélo électrique, une moto ou un véhicule à moteur à combustion interne, le garde-boue comprenant :
- une base (12, 12a, 112) de garde-boue ayant une extension circonférentielle principale ;
- une carte électronique tridimensionnelle (16, 116) à base de polymère recouvrant une partie de la base de garde-boue et ayant une extension circonférentielle principale, la carte électronique comprenant au moins une diode électroluminescente (21, 21c, 121, 121c), une pluralité de composants électroniques (22, 122) et des pistes métalliques (24, 124) pour raccorder électriquement la pluralité de composants électroniques et l'au moins une diode électroluminescente, dans lequel ladite carte électronique comprend une pluralité de crêtes et/ou de creux par rapport à son extension circonférentielle principale et par rapport à son extension transversale secondaire, dans lequel lesdites crêtes et/ou creux comprennent des pastilles plates respectives adaptées pour placer et fixer ladite pluralité de composants électroniques et l'au moins une diode électroluminescente ;
- une interface d'alimentation électrique (18) raccordée électriquement à la carte électronique et configurée pour générer de l'énergie électrique afin d'alimenter l'au moins une diode électroluminescente et la pluralité de composants électroniques ;
- un diffuseur optique (30, 31 ; 130, 131) recouvrant au moins partiellement une partie de la carte électronique, le diffuseur optique étant configuré pour diffuser un faisceau lumineux généré par l'au moins une diode électroluminescente et générer à partir de celui-ci un faisceau lumineux diffusé (FLR) ;
- un couvercle (20, 120) à base de polymère recouvrant au moins partiellement la base de garde-boue et ayant une extension circonférentielle principale, ledit couvercle comprenant une partie (14, 14a, 114, 114a) qui est au moins partiellement transparente par rapport au faisceau lumineux diffusé, dans lequel ladite partie au moins partiellement transparente recouvre le diffuseur optique, de telle sorte que ledit faisceau lumineux diffusé éclaire ladite partie au moins partiellement transparente.

2. Garde-boue lumineux (110) selon la revendication 1, comprenant en outre un dispositif de focalisation optique (256, 255) configuré pour recevoir le faisceau lumineux généré par l'au moins une diode et générer à partir de celui-ci un faisceau optique focalisé,
dans lequel le diffuseur optique est un guide de lumière (316) interposé entre la carte électronique (242L, 242S) et le couvercle (220) et recouvre au moins partiellement la carte électronique, le guide de lumière étant constitué d'un film optique flexible comprenant une partie d'entrée configurée pour recevoir le faisceau optique focalisé et comprenant une partie de sortie (241, 243) configurée pour générer le faisceau lumineux diffusé vers la partie au moins partiellement transparente (214, 214a) du couvercle (220),
dans lequel l'au moins une diode électroluminescente (251) et le dispositif de focalisation optique (256, 255) sont positionnés sur la carte électronique (242S, 242L) en correspondance avec une partie du film optique, et dans lequel le film optique est configuré pour :
- recevoir le faisceau lumineux focalisé en correspondance de la partie d'entrée du film optique et l'injecter dans le film optique ;
- propager le faisceau lumineux injecté vers la partie de sortie (241, 243) du film optique, dans lequel la partie au moins partiellement transparente (214, 214a) du couvercle (220) recouvre au moins partiellement la partie de sortie (241, 243) du film optique.

3. Garde-boue lumineux (10, 11, 101, 111, 110, 210) selon les revendications 1 ou 2, dans lequel la surface supérieure de la base (112) de garde-boue comprend une pluralité de crêtes et/ou de creux par rapport à son extension circonférentielle principale et comprend des pastilles plates respectives sur les crêtes et/ou à l'intérieur des creux, dans lequel la carte électronique (16c, 16cc, 116c, 116cc ; 242L, 242S, 242LP, 242SP) comprend un profil de section ondulé comprenant ladite pluralité de crêtes et/ou de creux, dans lequel la position des crêtes de la surface supérieure de la base (112) de garde-boue coïncide avec la position des crêtes de la carte électronique tridimensionnelle (16c, 16cc, 116c, 116cc ; 242L, 242S, 242LP, 242SP), et dans lequel la position des creux de la surface supérieure de la base (112) de garde-boue coïncide avec la position des creux de la carte électronique tridimensionnelle (16c, 16cc, 116c, 116cc ; 242L, 242S, 242LP, 242SP).

4. Garde-boue lumineux (110) selon l'une quelconque des revendications précédentes, dans lequel la base de garde-boue et la carte électronique sont constituées d'une seule base polymère (112a) ayant une extension circonférentielle principale et comprenant au moins une diode électroluminescente (251), la pluralité de composants électroniques (222) et les pistes métalliques (224, 225),
dans lequel ladite base polymère unique et ladite pluralité de crêtes et/ou de creux sont co-moulés,
et dans lequel ladite base polymère unique comprend ladite pluralité de crêtes et/ou de creux.

5. Garde-boue lumineux (210) selon la revendication 1, comprenant en outre :
- au moins une diode électroluminescente (250) supplémentaire de type rouge-vert-bleu ;
- un premier dispositif de focalisation optique (254, 252) configuré pour recevoir le faisceau lumineux généré par l'au moins une diode (251) et générer à partir de celui-ci un premier faisceau optique focalisé (FLR) ;
- un second dispositif de focalisation optique (253) configuré pour recevoir le faisceau lumineux généré par l'au moins une diode (250) supplémentaire et générer à partir de celui-ci un second faisceau optique focalisé (FLC) ;
dans lequel le diffuseur optique comprend un premier (216) et un second (215) guide de lumière, dans lequel :
• le second guide de lumière (215) est interposé entre la carte électronique (242LP, 242SP) et le premier guide de lumière et il recouvre au moins partiellement la carte électronique (242LP, 242SP) ;
• le premier guide de lumière (216) est interposé entre le second guide de lumière (215) et le couvercle (220) et recouvre au moins partiellement la carte électronique (242LP, 242SP) ;
le premier guide de lumière (216) étant mis en œuvre avec un premier film optique flexible comprenant une partie d'entrée configurée pour recevoir le premier faisceau optique focalisé (FLR) et comprenant une partie de sortie (241, 241-1) configurée pour générer un premier faisceau lumineux diffusé vers une première partie de la partie au moins partiellement transparente (314),
le second guide de lumière (215) étant mis en œuvre avec un second film optique flexible comprenant une partie d'entrée configurée pour recevoir le second faisceau optique focalisé (FLC) et comprenant une partie de sortie (240 ; 240-1, 240-2) configurée pour générer un second faisceau lumineux diffusé vers une seconde partie de la partie au moins partiellement transparente (314), en particulier ladite seconde partie étant complémentaire de ladite première partie de manière à éclairer entièrement la partie au moins partiellement transparente (314) du couvercle (220),
dans lequel l'au moins une diode électroluminescente (251) et le premier dispositif de focalisation optique (254, 252) sont positionnés sur la carte électronique (242SP, 242LP) en correspondance avec une partie du premier film optique (216),
dans lequel l'au moins une diode électroluminescente (250) supplémentaire et le second dispositif de focalisation optique (253) sont positionnés sur la carte électronique (242SP, 242LP) en correspondance avec une partie du second film optique (215),
dans lequel le premier film optique (216) est configuré pour :
- recevoir le premier faisceau lumineux focalisé (FLR) en correspondance de la partie d'entrée du premier film optique et l'injecter dans le premier film optique ;
- propager le premier faisceau lumineux injecté vers la partie de sortie (241, 241-1) du premier film optique, dans lequel la partie au moins partiellement transparente (314) du couvercle (220) recouvre au moins partiellement la partie de sortie (241, 241-1) du premier film optique ;
et dans lequel le second film optique (215) est configuré pour :
- recevoir le second faisceau lumineux focalisé (FLC) en correspondance de la partie d'entrée du second film optique et l'injecter dans le second film optique ;
- propager le second faisceau lumineux injecté vers la partie de sortie (240 ; 240-1, 240-2) du second film optique, dans lequel la partie au moins partiellement transparente (314) du couvercle (220) recouvre au moins partiellement la partie de sortie (240 ; 240-1, 240-2) du second film optique.

6. Garde-boue lumineux selon l'une quelconque des revendications précédentes, dans lequel l'interface d'alimentation électrique est un récepteur d'énergie sans fil à courte portée, choisi parmi :
- un récepteur de couplage par induction magnétique, comprenant une bobine inductive reliée électriquement à la pluralité de composants électroniques et à l'au moins une diode électroluminescente, la bobine inductive étant configurée pour alimenter l'au moins une diode et la pluralité de composants électroniques au moyen du couplage inductif avec une autre bobine d'un dispositif d'alimentation et de commande (200) ;
- un récepteur de couplage par résonance magnétique, comprenant une bobine de résonance magnétique reliée à la pluralité de composants électroniques et à l'au moins une diode électroluminescente, la bobine de résonance étant configurée pour alimenter l'au moins une diode et la pluralité de composants électroniques au moyen du couplage par résonance magnétique à une même fréquence avec une autre bobine d'un dispositif d'alimentation et de commande (200) ;
- un récepteur à couplage capacitif, comprenant une plaque métallique reliée électriquement à la pluralité de composants électroniques et à l'au moins une diode électroluminescente, la plaque métallique étant configurée pour alimenter l'au moins une diode et la pluralité de composants électroniques au moyen d'un couplage électrique avec une autre plaque métallique d'un dispositif d'alimentation et de commande (200) ;
- un récepteur radiofréquence, comprenant une antenne flexible positionnée au moins partiellement le long de l'extension circonférentielle du garde-boue, l'antenne étant reliée électriquement à la pluralité de composants électroniques et à l'au moins une diode électroluminescente, l'antenne étant en outre configurée pour alimenter l'au moins une diode et la pluralité de composants électroniques au moyen d'un courant électrique généré par un champ électromagnétique à radiofréquence transmis depuis une autre antenne d'un dispositif d'alimentation et de commande (200).

7. Garde-boue lumineux selon l'une quelconque des revendications 1 à 5, dans lequel l'interface d'alimentation électrique est un câble d'alimentation électrique.

8. Garde-boue lumineux selon la revendication 6 ou 7, comprenant en outre une partie (34) destinée à être couplée de façon mécanique à un dispositif (200) configuré pour alimenter et commander l'au moins une diode électroluminescente et la pluralité de composants électroniques,
dans lequel ladite partie de couplage renferme l'interface d'alimentation électrique, en particulier la bobine inductive, la bobine de résonance, la plaque métallique ou au moins une partie de l'antenne.

9. Kit, comprenant un garde-boue lumineux selon la revendication 6 ou la revendication 8, lorsqu'elle dépend de la revendication 6, et un dispositif d'alimentation et de commande (200) du garde-boue lumineux, le dispositif comprenant :
- une batterie (218) ;
- un émetteur d'énergie sans fil (224) relié électriquement à la batterie ;
- une coque supérieure (202) et une coque inférieure (204) ;
- des moyens (207) de verrouillage sur le garde-boue ; dans lequel la batterie, l'émetteur et le récepteur sont interposés entre la coque supérieure et la coque inférieure,
dans lequel le récepteur d'énergie sans fil du garde-boue est couplé à l'émetteur d'énergie sans fil (224) du dispositif d'alimentation et de commande (200), afin de transférer l'énergie de la batterie vers le garde-boue pour alimenter l'au moins une diode électroluminescente et la pluralité de composants électroniques,
le garde-boue comprenant en outre des moyens de verrouillage (34, 40) adaptés pour être reliés mécaniquement aux moyens de verrouillage (207) du dispositif d'alimentation et de commande.

10. Véhicule, comprenant au moins deux roues, en particulier un vélo ou un tricycle ou un quadricycle, le véhicule comprenant un garde-boue lumineux selon l'une quelconque des revendications 1 à 8.

11. Procédé de fabrication d'un garde-boue lumineux (10, 11, 101, 111), comprenant les étapes suivantes :
a) fournir une base (12) de garde-boue ;
b) fournir un matériau à base de polymère ;
c) mouler par injection une couche à base de polymère et la base de garde-boue de manière à obtenir une couche moulée et la base de garde-boue ayant une extension circonférentielle principale et générer une pluralité de micro-rainures dans la couche moulée, ledit moulage comprenant la génération d'une surface supérieure de la couche moulée comprenant une pluralité de crêtes et/ou de creux par rapport à son extension circonférentielle principale et par rapport à son extension transversale secondaire, dans lequel lesdites crêtes et/ou creux comprennent des pastilles plates respectives ;
d) immerger la couche moulée dans plusieurs bains galvaniques afin de déposer une pluralité de couches de métal dans les micro-rainures, générant ainsi une pluralité de pistes métalliques (24, 124) ;
e) fixer sur les pastilles de la couche moulée au moins une diode électroluminescente et une pluralité de composants électroniques à l'aide d'une colle conductrice, obtenant ainsi une carte électronique tridimensionnelle à base de polymère (16, 116) ayant une extension circonférentielle principale ;
f) relier électriquement une interface d'alimentation électrique à la carte électronique tridimensionnelle ;
g) loger la carte électronique tridimensionnelle dans un renfoncement (26) de la base de garde-boue ;
h) recouvrir au moins un diffuseur optique (30, 31, 130, 131) sur une partie de la carte électronique ;
i) fournir un couvercle (20, 120) à base de polymère ayant une extension circonférentielle principale, ledit couvercle comprenant une partie (14, 14a, 114, 114a) étant au moins partiellement transparente par rapport à un faisceau lumineux diffusé généré par le diffuseur optique, ledit couvercle ayant une extension circonférentielle principale ;
j) recouvrir au moins partiellement le couvercle sur la base de garde-boue, de sorte que la partie au moins partiellement transparente recouvre le diffuseur optique ;
k) fixer le couvercle à la base de garde-boue.

12. Procédé de fabrication selon la revendication 11,
dans lequel l'étape b) comprend fournir le matériau à base de polymère dopé avec des atomes métalliques, et dans lequel l'étape c) comprend :
c1) mouler par injection ladite couche à base de polymère et la base de garde-boue de manière à obtenir la couche moulée et la base de garde-boue ayant une extension circonférentielle principale ;
c2) tracer par ablation la pluralité de micro-rainures sur la surface de la couche moulée au moyen d'un faisceau laser ;
c3) activer les atomes métalliques contenus dans la couche polymère dans les micro-rainures ;
et dans lequel l'étape d) comprend :
d1) déposer, au cours d'un premier bain galvanique, une première couche métallique sur les atomes métalliques dans les micro-rainures ;
d2) déposer successivement au moins deux couches métalliques supplémentaires dans les micro-rainures.

13. Procédé de fabrication d'un garde-boue lumineux (110) selon la revendication 11, dans lequel :
- l'étape a) comprend fournir une base de garde-boue (112a) avec une pluralité de micro-rainures (224, 225) moulées par injection dans celle-ci ;
- l'étape b) comprend en outre fournir une couche supplémentaire de matériau à base de polymère dopé avec des atomes métalliques,
- à l'étape c), le moulage par injection comprend en outre le moulage par injection du matériau polymère dopé dans les micro-rainures ;
- l'étape d) comprend :
• déposer, au cours d'un premier bain galvanique, une première couche métallique sur le matériau polymère dopé dans les micro-rainures ; et
• déposer ultérieurement au moins deux couches métalliques supplémentaires dans les micro-rainures, générant ainsi une base (112a) de garde-boue unique avec les pistes métalliques intégrées (224, 225).

14. Procédé de fabrication selon la revendication 13,
dans lequel, à l'étape h), le recouvrement de l'au moins un diffuseur optique comprend le recouvrement d'un guide de lumière (316) sur au moins une partie de la base (112a) de garde-boue unique, dans lequel le guide de lumière est mis en œuvre avec un film optique flexible ;
et dans lequel l'étape e) comprend fixer un dispositif de focalisation optique (255, 256) sur une pastille de la couche moulée, de sorte que l'au moins une diode électroluminescente (251) et le dispositif de focalisation optique (255, 256) soient positionnés sur la base (112a) de garde-boue unique en correspondance d'une partie d'entrée du film optique et de sorte que le dispositif de focalisation optique soit adapté pour recevoir le faisceau lumineux généré par l'au moins une diode et le focaliser sur la partie d'entrée du guide de lumière,
et dans lequel l'étape j) comprend recouvrir la partie au moins partiellement transparente (214, 214a) du couvercle sur une partie de sortie (241, 243) du film optique.

15. Procédé de fabrication d'un garde-boue lumineux (110), comprenant les étapes suivantes :
a) fournir une base (112) de garde-boue ayant une surface supérieure comprenant une pluralité de crêtes et/ou de creux ;
b) fournir une couche (242S, 242L) de matériau à base de polymère ;
c) tracer une pluralité de pistes métalliques (224) sur le substrat polymère, au moyen d'au moins une encre conductrice ;
d) fixer sur le substrat polymère au moins une diode électroluminescente (251) et une pluralité de composants électroniques (222), obtenant ainsi une carte électronique ;
e) fixer un dispositif de focalisation optique (255, 256) au moins partiellement sur le substrat polymère ou au moins partiellement sur la base de garde-boue ;
f) thermoformer la carte électronique sur la surface supérieure de la base de garde-boue de manière à faire adhérer la carte électronique à la base de garde-boue, obtenant ainsi une carte électronique tridimensionnelle (242L, 242S) et la base de garde-boue ayant une extension circonférentielle principale,
dans lequel ledit thermoformage comprend :
- générer un profil de section ondulé de la carte électronique qui s'adapte à la surface supérieure de la base de garde-boue, générant ainsi une surface supérieure de la carte électronique tridimensionnelle comprenant ladite pluralité de crêtes et/ou de creux par rapport à son extension circonférentielle principale et par rapport à son extension transversale, dans lequel lesdites crêtes et/ou creux comprennent des pastilles plates respectives sur lesquels sont fixés l'au moins une diode électroluminescente et la pluralité de composants électroniques ;
g) relier électriquement une interface d'alimentation électrique à la carte électronique tridimensionnelle ;
h) recouvrir un guide de lumière (316) mis en œuvre avec un film optique flexible sur au moins une partie de la carte électronique tridimensionnelle ;
i) fournir un couvercle (220) à base de polymère ayant une extension circonférentielle principale, ledit couvercle comprenant une partie (214, 214a) qui est au moins partiellement transparente par rapport à un faisceau lumineux diffusé généré par le diffuseur optique, ledit couvercle ayant une extension circonférentielle principale ;
i) recouvrir au moins partiellement le couvercle sur la base de garde-boue, de sorte que la partie au moins partiellement transparente recouvre le diffuseur optique ;
j) fixer le couvercle à la base de garde-boue.
